# EUROPEAN PATENT APPLICATION

(11) **EP 4 852 380 A1**
(43) Date of publication of application: **09.12.2026**
(21) Application number: 24925538.1
(22) Date of filing: 18.10.2024
(51) Int. Cl.: H04L 27/06, H04L 27/04, H04L 27/26

(54) **COMMUNICATION METHOD AND APPARATUS**

(30) Priority: 23.02.2024 CN 202410208641; 02.08.2024 CN 202411063310
(71) Applicant: HUAWEI TECHNOLOGIES CO., LTD., Shenzhen, Guangdong 518129 (CN)
(72) Inventor: LI, Qiang, Shenzhen, Guangdong 518129 (CN); ZHOU, Han, Shenzhen, Guangdong 518129 (CN); TIE, Xiaolei, Shenzhen, Guangdong 518129 (CN); HUANG, Can, Shenzhen, Guangdong 518129 (CN)
(74) Representative: Huawei European IPR
(86) International application number: PCT/CN2024/125729
(87) International publication number: WO 2025/175800

(57) **Abstract**

This application relates to a communication method and an apparatus. A signal transmitting end determines a first root, where the first root corresponds to a first parameter; and the signal transmitting end sends or receives a first signal, where the first signal is determined based on a first ZC sequence, the first ZC sequence is determined based on the first root, and the first parameter includes at least one of the following: a bandwidth of the first signal, subcarrier spacing of the first signal, or a carrier frequency used for transmission of the first signal. In embodiments of this application, a root of a ZC sequence may be adjusted based on a parameter, so that a time domain offset of a correlation peak corresponding to the ZC sequence can be adjusted, to make the time domain offset as small as possible. In this way, the first signal can be detected by a signal receiving end, thereby increasing the probability of successful demodulation by the signal receiving end.

## Description

### CROSS-REFERENCE TO RELATED APPLICATIONS

This application claims priorities to Chinese Patent Application No. 202410208641.X, filed with the China National Intellectual Property Administration on February 23, 2024 and entitled "COMMUNICATION METHOD AND APPARATUS", and to Chinese Patent Application No. 202411063310.8, filed with the China National Intellectual Property Administration on August 2, 2024 and entitled "COMMUNICATION METHOD AND APPARATUS", both of which are incorporated by reference in their entireties.

### TECHNICAL FIELD

This application relates to the field of communication technologies, and in particular, to a communication method and an apparatus.

### BACKGROUND

In a wireless communication system, ZC (Zadoff-Chu) sequences are commonly used. ZC sequences may be used to generate synchronization signals, reference signals, or the like in the communication system.

For signals generated based on ZC sequences, a receiving end may demodulate signals by using a coherent receiver. The coherent receiver may sample the received signals and correlate the sampling results with local ZC sequences, to obtain demodulation results based on the positions of correlation peaks. In a network, some coherent receivers with low costs and low power consumption may be deployed. These coherent receivers often rely on crystal oscillators with limited accuracy. . Using such crystal oscillators for down-conversion and demodulation may introduce frequency offsets. When frequency offsets are applied to ZC sequences, the time domain positions of correlation peaks may shift. If the time domain offset of the correlation peak caused by the frequency offset is large, coherent demodulation may fail.

### SUMMARY

Embodiments of this application provide a communication method and an apparatus to improve the success rate of signal demodulation.

According to a first aspect, a communication method is provided. The method is applied to a signal transmitting end, to be specific, the method may be performed by the signal transmitting end, may be performed by a larger device including the signal transmitting end, or may be performed by a chip system or another functional module. The chip system or the functional module can implement a function of the signal transmitting end. The chip system or the functional module is, for example, disposed in the signal transmitting end. The signal transmitting end is, for example, a network device or a functional unit that can implement a function of the network device, for example, a chip. Alternatively, the signal transmitting end is, for example, a terminal device or a functional unit that can implement a function of the terminal device, for example, a chip. Alternatively, the method is applied to a signal receiving end, to be specific, the method may be performed by the signal receiving end, may be performed by a larger device including the signal receiving end, or may be performed by a chip system or another functional module. The chip system or the functional module can implement a function of the signal receiving end. The chip system or the functional module is, for example, disposed in the signal receiving end. The signal receiving end is, for example, a network device or a functional unit that can implement a function of the network device, for example, a chip. Alternatively, the signal receiving end is, for example, a terminal device or a functional unit that can implement a function of the terminal device, for example, a chip. The network device includes, for example, an access network device and/or a core network device, and the access network device includes, for example, a base station. The method includes: determining a first root, where the first root corresponds to a first parameter; and sending or receiving a first signal, where the first signal is determined based on a first ZC sequence, the first ZC sequence is determined based on the first root, and the first parameter includes at least one of the following: a bandwidth of the first signal, a subcarrier spacing of the first signal, a quantity of symbol segments of the first signal, or a carrier frequency used for transmission of the first signal.

In embodiments of this application, it is considered that a time domain offset of a correlation peak is related to a root of a ZC sequence, and the root of the ZC sequence may affect a position of the correlation peak. The root of the ZC sequence is related to a corresponding parameter (for example, one or more of a bandwidth of a signal, a subcarrier spacing of the signal, or a carrier frequency used for transmission of the signal). Therefore, in embodiments of this application, corresponding roots may be set respectively for different parameters. It may be understood as that the root of the ZC sequence may be adjusted based on the parameter, so that the time domain offset of the correlation peak corresponding to the ZC sequence can be adjusted, to make the time domain offset as small as possible. In this way, the first signal can be detected by the signal receiving end, thereby increasing the probability of successful demodulation by the signal receiving end.

In an optional implementation, the method further includes: receiving a first root set; determining a first root set based on predefined information, where the predefined information includes information about a correspondence between the first parameter and the first root set; or determining a first root set based on the first parameter, where the first root belongs to the first root set, and the first root set corresponds to the first parameter. The signal transmitting end or the signal receiving end needs to determine the first root. For example, a determining manner includes: determining the first root set, and then determining the first root from the first root set. This manner may be understood as follows: In this embodiment of this application, corresponding root sets may be set respectively for different parameters, so that a corresponding root may be selected from the root sets during application. This is more flexible.

In an optional implementation, any root q in the first root set satisfies the following relationship: $Δ T = mod \left(\frac{{qn}_{Δ}}{{N}_{zc} Δ f}, \frac{1}{Δ f}\right)$, where ΔT represents a maximum time domain offset of the first signal, 1 *≤ q < N_{ZC}*, *N_{ZC}* represents a length of the first ZC sequence, Δ*f* represents the subcarrier spacing of the first signal, *N_{zc}*Δ*f* represents the bandwidth of the first signal, *n*_{Δ} represents a frequency offset of the first signal, and mod represents a modulo operation. For example, in this embodiment of this application, a root corresponding to the first parameter, or a root set or a parameter set corresponding to the first parameter may be determined according to the formula. Therefore, in a preset tolerable maximum frequency offset, a time domain offset calculated by substituting any root q (or any u and/or v) in the root set (or a first set and/or a second set) designed in this embodiment of this application into the foregoing relationship may be within a preset sliding range of a detection window, and the first signal can be detected by the signal receiving end.

In an optional implementation, any root q in the first root set satisfies the following relationship: $\left\{\begin{matrix}Δ T = \frac{{n}_{o}}{Δ {fN}_{zc} {N}_{seg}} \\ \left({kn}_{o}q-{kn}_{Δ}\right) mod {N}_{ZC} = 0\end{matrix}\right.$, where *nₒ* represents a quantity of sampling points of a time offset, Δ*T* represents a maximum time domain offset of the first signal, 1 *≤ q < N_{ZC}*, *N_{zc}* represents a length of the first ZC sequence, Δ*f* represents the subcarrier spacing of the first signal, *N_{zc}*Δ*f* represents the bandwidth of the first signal, *n*_{Δ} represents a frequency offset of the first signal, k represents a constant, and mod represents a modulo operation.

In an optional implementation, the maximum time domain offset of the first signal is a sliding range of a detection window, and the detection window is used to detect the first signal. When the root (or the root set, or the parameter set) corresponding to the first parameter is determined, the sliding range of the detection window may be specified as the maximum time domain offset of the first signal. Therefore, a maximum time domain offset of a signal obtained based on the ZC sequence generated based on the determined root may be within the sliding range of the detection window, and the signal can be detected by the detection window, thereby increasing a detection success rate.

In an optional implementation, the determining the first root set based on the first parameter includes: determining, based on the first parameter, a quantity of cyclic shifts that the first root set needs to support; and determining the first root set based on the quantity of cyclic shifts.

In an optional implementation, the method further includes: determining, based on the first root set, a quantity of cyclic shifts that the first root set needs to support.

In an optional implementation, the quantity of symbol segments of the first signal is M1, and the quantity of cyclic shifts is K1; or the quantity of symbol segments of the first signal is M2, and the quantity of cyclic shifts is K2, where M1 is not equal to M2, and K1 is different from K2.

In an optional implementation, the bandwidth of the first signal is W3, and the quantity of cyclic shifts is K3; or the bandwidth of the first signal is W4, and the quantity of cyclic shifts is K4, where W3 is not equal to W4, and K3 is different from K4.

In an optional implementation, the subcarrier spacing is c3, and the quantity of cyclic shifts is K5; or the subcarrier spacing is c4, and the quantity of cyclic shifts is K6, where c3 is not equal to c4, and K5 is different from K6.

In an optional implementation, the quantity of symbol segments of the first signal is N1, and the first root set is S7; or the quantity of symbol segments of the first signal is N2, and the first root set is S8, where N1 is not equal to N2, and S7 is different from S8.

In an optional implementation, that S7 is different from S8 includes one or more of the following: A quantity of roots included in S7 is different from a quantity of roots included in S8; at least one root included in S7 is different from a root included in S8; or a function used to determine a root in S7 is different from a function used to determine a root in S8.

In an optional implementation, the bandwidth of the first signal is W1, and the first root set is S1; or the bandwidth of the first signal is W2, and the first root set is S2, where W1 is not equal to W2, and S1 is different from S2. The first parameter includes, for example, a bandwidth of a signal. When bandwidths of the signal are different, corresponding root sets may be the same or different.

In an optional implementation, that S1 is different from S2 includes one or more of the following: A quantity of roots included in S1 is different from a quantity of roots included in S2; at least one root included in S1 is different from a root included in S2; or a function used to determine a root in S1 is different from a function used to determine a root in S2. In this embodiment of this application, an example in which the function used to determine a root in S1 is the same as the function used to determine a root in S2 is used. For example, both the functions use Formula 8 described below. Alternatively, the function used to determine a root in S1 may be different from the function used to determine a root in S2. For example, when first parameters are different, functions used to determine roots in different root sets may be the same or different.

In an optional implementation, the subcarrier spacing is c1, and the first root set is S3; or the subcarrier spacing is c2, and the first root set is S4, where c1 is not equal to c2, and S3 is different from S4. The first parameter includes, for example, a subcarrier spacing. When subcarrier spacings are different, corresponding root sets may be the same or different.

In an optional implementation, that S3 is different from S4 includes one or more of the following: A quantity of roots included in S3 is different from a quantity of roots included in S4; at least one root included in S3 is different from a root included in S4; or a function used to determine a root in S3 is different from a function used to determine a root in S4.

In an optional implementation, the carrier frequency used for transmission of the first signal is f1, and the first root set is S5; or the carrier frequency used for transmission of the first signal is f2, and the first root set is S6, where f1 is not equal to f2, and S5 is different from S6. The first parameter includes, for example, a carrier frequency used for transmission of a signal. When carrier frequencies used for transmission of the signal are different, corresponding root sets may be the same or different.

In an optional implementation, that S5 is different from S6 includes one or more of the following: A quantity of roots included in S6 is different from a quantity of roots included in S6; at least one root included in S6 is different from a root included in S6; or a function used to determine a root in S6 is different from a function used to determine a root in S6.

In an optional implementation, the first root set includes at least two subsets. A subset 1 among the at least two subsets is {N1, N1+1, ..., N2}, and a subset 2 among the at least two subsets is {N3, N3+1, ..., N4}. N1, N2, N3, and N4 are all positive integers, N4 is equal to the length of the first ZC sequence minus 1, and N1<N2<N3<N4. This is a structure of a root set, or the root set may not include a subset and is a whole. For example, values of roots included in the root set are consecutive.

In an optional implementation, the determining the first root includes: determining the first root from the first root set based on an identifier of a first cell used for sending or receiving the first signal; or determining the first root from the first root set based on an index of a time unit used for sending or receiving the first signal. If the signal transmitting end or the signal receiving end determines the first root from the first root set, the signal transmitting end or the signal receiving end may determine the first root in a plurality of different manners. For example, in addition to the foregoing manners, the signal transmitting end or the signal receiving end may further randomly determine the first root from the first root set. This is flexible.

In an optional implementation, the method further includes: receiving a first set and/or a second set; determining a first set and/or a second set based on predefined information, where the predefined information includes information about a correspondence between the first parameter and the first set and/or a correspondence between the first parameter and the second set; or determining a first set and/or a second set based on the first parameter, where the first set and/or the second set is used to determine the first root, and the first set and/or the second set corresponds to the first parameter. The signal transmitting end or the signal receiving end needs to determine the first root. For example, another determining manner includes: determining a parameter set (the parameter set includes, for example, the first set and/or the second set), and then determining the first root based on the parameter set. This manner may be understood as follows: In this embodiment of this application, corresponding parameter sets may be set respectively for different parameters, so that a corresponding root may be determined based on the parameter sets during application. This is more flexible.

In an optional implementation, the method further includes: determining the first root based on the first set and/or the second set; or determining a first root set based on the first set and/or the second set, and determining the first root from the first root set. For example, the signal transmitting end or the signal receiving end may determine the first root set based on the parameter set, and then determine the first root from the root set, so that a selectable range for determining the first root is larger. Alternatively, the signal transmitting end or the signal receiving end may directly determine the first root based on the parameter first, without determining the root set. This reduces processing steps of the signal transmitting end or the signal receiving end, and simplifies implementation of the signal transmitting end.

In an optional implementation, the bandwidth of the first signal is W1, the first set is U1, and the second set is V1; or the bandwidth of the first signal is W2, the first set is U2, and the second set is V2, where W1 is not equal to W2; and U1 is different from U2 and/or V1 is different from V2. For example, the first parameter includes a bandwidth of a signal. If bandwidths of the signal are different, corresponding first sets are the same or different, and corresponding second sets are the same or different.

In an optional implementation, the subcarrier spacing is c1, the first set is U3, and the second set is V3; or the subcarrier spacing is c2, the first set is U4, and the second set is V4, where c1 is not equal to c2; and U3 is different from U4 and/or V3 is different from V4. For example, the first parameter includes a subcarrier spacing. If subcarrier spacings are different, corresponding first sets are the same or different, and corresponding second sets are the same or different.

In an optional implementation, the carrier frequency used for transmission of the first signal is f1, the first set is U5, and the second set is V5; or the carrier frequency used for transmission of the first signal is f2, the first set is U6, and the second set is V6, where f1 is not equal to f2; and U5 is different from U6 and/or V5 is different from V6. For example, the first parameter includes a carrier frequency used for transmission of a signal. If carrier frequencies used for transmission of the signal are different, corresponding first sets are the same or different, and corresponding second sets are the same or different.

In an optional implementation, the first signal is modulated by using OOK. Alternatively, another modulation scheme may be used for the first signal, for example, QPSK modulation. This is not limited.

In an optional implementation, the first signal is a synchronization signal or a wake-up signal. Alternatively, the first signal may be another signal, for example, a waveform signal. This is not limited.

According to a second aspect, a communication apparatus is provided. The communication apparatus may be the signal transmitting end according to the first aspect. The communication apparatus has a function of the foregoing signal transmitting end. The communication apparatus is, for example, a signal transmitting end, another device including a function of the signal transmitting end, or a chip system (or a chip) or another functional module. The chip system or the functional module can implement the function of the signal transmitting end. The chip system or the functional module is, for example, disposed in the signal transmitting end. Optionally, the signal transmitting end is a network device, or is disposed in a network device. The network device includes, for example, an access network device and/or a core network device. Alternatively, optionally, the signal transmitting end is a terminal device, or is disposed in a terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to determine a first root, where the first root corresponds to a first parameter. The transceiver unit is configured to send a first signal, where the first signal is determined based on a first ZC sequence, the first ZC sequence is determined based on the first root, and the first parameter includes at least one of the following: a bandwidth of the first signal, a subcarrier spacing of the first signal, a quantity of symbol segments of the first signal, or a carrier frequency used for transmission of the first signal.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the signal transmitting end according to the first aspect.

According to a third aspect, a communication apparatus is provided. The communication apparatus may be the signal receiving end according to the first aspect. The communication apparatus has a function of the foregoing signal receiving end. The communication apparatus is, for example, a signal receiving end, another device including a function of the signal receiving end, or a chip system (or a chip) or another functional module. The chip system or the functional module can implement the function of the signal receiving end. The chip system or the functional module is, for example, disposed in the signal receiving end. Optionally, the signal receiving end is a network device, or is disposed in a network device. The network device includes, for example, an access network device and/or a core network device. Alternatively, optionally, the signal receiving end is a terminal device, or is disposed in a terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to related descriptions in the second aspect.

In an optional implementation, the processing unit is configured to determine a first root, where the first root corresponds to a first parameter. The transceiver unit is configured to receive a first signal, where the first signal is determined based on a first ZC sequence, the first ZC sequence is determined based on the first root, and the first parameter includes at least one of the following: a bandwidth of the first signal, a subcarrier spacing of the first signal, a quantity of symbol segments of the first signal, or a carrier frequency used for transmission of the first signal.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the function of the signal receiving end according to the first aspect.

According to a fourth aspect, a communication apparatus is provided. The communication apparatus may be a signal transmitting end, or may be a chip or a chip system used in a signal transmitting end. The communication apparatus includes a processor. The processor is configured to cause the communication apparatus to perform the method performed by the signal transmitting end in the foregoing aspects. Optionally, the processor is coupled to a memory. When the processor reads a computer program or instructions, the communication apparatus is caused to perform the method performed by the signal transmitting end in the foregoing aspects. The memory is configured to store the computer program or the instructions, and may be included in the communication apparatus, or may be disposed outside the communication apparatus. Optionally, the communication apparatus further includes a communication interface, and the processor invokes the computer program or the instructions from the communication interface and runs the computer program or the instructions.

According to a fifth aspect, a communication apparatus is provided. The communication apparatus may be a signal receiving end, or may be a chip or a chip system used in a signal receiving end. The communication apparatus includes a processor. The processor is configured to cause the communication apparatus to perform the method performed by the signal receiving end in the foregoing aspects. Optionally, the processor is coupled to a memory. When the processor reads a computer program or instructions, the communication apparatus is caused to perform the method performed by the signal receiving end in the foregoing aspects. The memory is configured to store the computer program or the instructions, and may be included in the communication apparatus, or may be disposed outside the communication apparatus. Optionally, the communication apparatus further includes a communication interface, and the processor invokes the computer program or the instructions from the communication interface and runs the computer program or the instructions.

According to a sixth aspect, a communication system is provided, including a signal transmitting end and a signal receiving end. The signal transmitting end is configured to perform the method performed by the signal transmitting end according to the first aspect, and the signal receiving end is configured to perform the method performed by the signal receiving end according to the first aspect. For example, the signal transmitting end may be implemented by the communication apparatus according to the second aspect or the fourth aspect, and the signal receiving end may be implemented by the communication apparatus according to the third aspect or the fifth aspect. Optionally, the communication system may further include another apparatus. This is not limited.

According to a seventh aspect, a computer-readable storage medium is provided. The computer-readable storage medium is configured to store a computer program or instructions. When the computer program or the instructions are run, the method performed by the signal transmitting end in the foregoing aspects is implemented.

According to an eighth aspect, a computer program product including instructions is provided. When a computer program or the instructions are run on a computer, the method according to the foregoing aspects is implemented.

### BRIEF DESCRIPTION OF DRAWINGS

FIG. 1A is a diagram of an OOK modulation scheme;
FIG. 1B is another diagram of an OOK modulation scheme;
FIG. 2A is a diagram of a coherent detection process;
FIG. 2B is a diagram of a correlation peak;
FIG. 3 is a diagram of a time domain offset generated for a correlation peak due to a frequency offset;
FIG. 4A and FIG. 4B are diagrams of two application scenarios according to an embodiment of this application;
FIG. 5 is a flowchart of a communication method according to an embodiment of this application;
FIG. 6A, FIG. 6B, FIG. 7A, and FIG. 7B are several diagrams of determining a root set according to an embodiment of this application;
FIG. 8 is a diagram of an apparatus according to an embodiment of this application; and
FIG. 9 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, a sequence, a time sequence, priorities, importance, or the like of the plurality of objects. In addition, step numbers in embodiments described in this application are merely intended to distinguish between different steps, but are not intended to limit a sequence of the steps. For example, S501 may occur before S502, after S502, or simultaneously with S502.

The following explains and describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, a terminal device in a scenario, including but not limited to the following scenarios: a sensing scenario, cellular communication, device-to-device (device-to-device, D2D) communication, vehicle-to-everything (vehicle-to-everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an uncrewed aerial vehicle, a robot, and indoor commercial scenarios (such as mobile phone projection, file sharing, and video transmission from a mobile phone to VR glasses). The terminal device may also be referred to as a V2X device when used in V2X, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal device may be a device, for example, an electricity meter or a water meter, in the D2D communication.

In addition, in embodiments of this application, the terminal device may alternatively be a terminal device in an IoT system. An IoT is an important part of future development of information technologies. A main technical feature of the IoT is connecting a thing to a network by using a communication technology, to implement an intelligent network for human-machine interconnection and thing-thing interconnection.

If various terminal devices described above are located in a vehicle (for example, placed in the vehicle or mounted in the vehicle), the terminal devices may be all considered as vehicle-mounted terminal devices. For example, the vehicle-mounted terminal device is also referred to as an on-board unit (on-board unit, OBU). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle can implement the method in this application by using the vehicle-mounted module, the vehicle-mounted assembly, the vehicle-mounted component, the vehicle-mounted chip, or the vehicle-mounted unit that is built in the vehicle.

The terminal device may be sometimes referred to as a user equipment (user equipment, UE), a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, an example in which the apparatus configured to implement the function of the terminal device is a terminal device is used to describe the technical solutions provided in embodiments of this application. In addition, for ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a V2X technology may be a road side unit (road side unit, RSU). The following uses an example in which the access network device is a base station for description. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In a CU-DU architecture, the access network device may include one or more of logical network elements such as a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open (open RAN, ORAN) system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). For ease of description, the CU, the CU-CP, the CU-UP, the DU, and the RU are used as examples for description in embodiments of this application. Any one of the CU (or the CU-CP and the CU-UP), the DU, and the RU in embodiments of this application may be implemented by using a software module, a hardware module, or a combination of a software module and a hardware module.

Optionally, in embodiments of this application, if the network device is in a distributed architecture, for example, the network device includes a CU and a DU, or includes a CU-CP, a CU-UP, and a DU, that the network device sends information to the UE may be specifically that the DU included in the network device sends information to the UE; and that the network device receives information from the UE may be specifically that the DU included in the network device receives information from the UE.

In embodiments of this application, a communication apparatus configured to implement a function of the network device may be a network device, or may be an apparatus that can support the network device in implementing the function, for example, a chip system. The apparatus may be installed in the network device. For example, a communication apparatus configured to implement a function of the access network device may be an access network device, or may be an apparatus that can support the access network device in implementing the function, for example, a chip system. The apparatus may be installed in the access network device. For another example, a communication apparatus configured to implement a function of the core network device may be an access network device, or may be an apparatus that can support the core network device in implementing the function, for example, a chip system. The apparatus may be installed in the core network device. In the technical solutions provided in embodiments of this application, an example in which the apparatus configured to implement the function of the access network device is an access network device and the apparatus configured to implement the function of the core network device is a core network device is used to describe the technical solutions provided in embodiments of this application.

The following describes technical features in embodiments of this application.

In a wireless communication system, complex sequences named Zadoff-Chu, referred to as ZC sequences for short, are commonly used. The ZC sequences may be used to generate synchronization signals, reference signals, waveform signals, or the like in the communication system. An expression of the ZC sequence is: ${x}_{q} \left(m\right) = {e}^{- j \frac{πqm \left(m+1\right)}{{N}_{ZC}}} , 0 \leq m < {N}_{ZC}$ (Formula 1)

*N_{ZC}* represents a length of the ZC sequence, *q* represents a root (root) of the ZC sequence, and 1 ≤ *q < N_{ZC}. x_{q}*(*m*) represents a ZC sequence whose root is q, and m is an integer. For example, it is assumed that *N_{ZC} =* 5 and root=3, which may be substituted into Formula 1 for calculation, to obtain the following: ${x}_{q = 3} \left(m\right) = {e}^{- j \frac{πqm \left(m+1\right)}{{N}_{ZC}}} = \left[1, {e}^{- j \frac{6}{5} π}, {e}^{- j \frac{18}{5} π}, {e}^{- j \frac{36}{5} π}, 1\right]$ (Formula 2)

*x*_{*q=*3}(*m*) in Formula 2 represents a ZC sequence whose length is 5 and whose root is 3.

Optionally, in the communication system, the root of the ZC sequence may be obtained through calculation in an indirect manner. For example, in a 5G NR communication system, the root q may be calculated by using u and v, where u is a sequence group index (sequence group index), v is a base sequence index (base sequence index), and both u and v are integers. Therefore, u and v may be first determined, and then the root q is determined based on u and v.

The root q determined based on u and v may satisfy the following relationship, or the root q may be determined based on u, v, and the following relationship: $q = \left⌊\overline{q}+1/2\right⌋ + v ⋅ {\left(-1\right)}^{\left⌊2\overline{q}\right⌋}$ (Formula 3) $\overline{q} = {N}_{ZC} ⋅ \left(u+1\right) / 31$ (Formula 4)

A horizontal bar above q in "*q*" represents a mark. In some communication systems, signals that are easy for a receiver with low power consumption to demodulate need to be sent, for example, signals modulated by using on-off-keying (on-off-keying, OOK). In OOK modulation, transmission of information may be performed simply based on sending a signal or not. For example, a modulation symbol for transmitting a signal represents "1" or "ON", and a modulation symbol for not sending a signal represents "0" or "OFF". The receiver may demodulate, through simple envelope detection, a simple modulation waveform similar to an OOK modulation waveform, to achieve objectives of low complexity, low power consumption, and low costs. For example, a low-power wake-up signal (lower-power wake-up signal, LP-WUS) in a 5G new radio (new radio, NR) system may be modulated by using OOK.

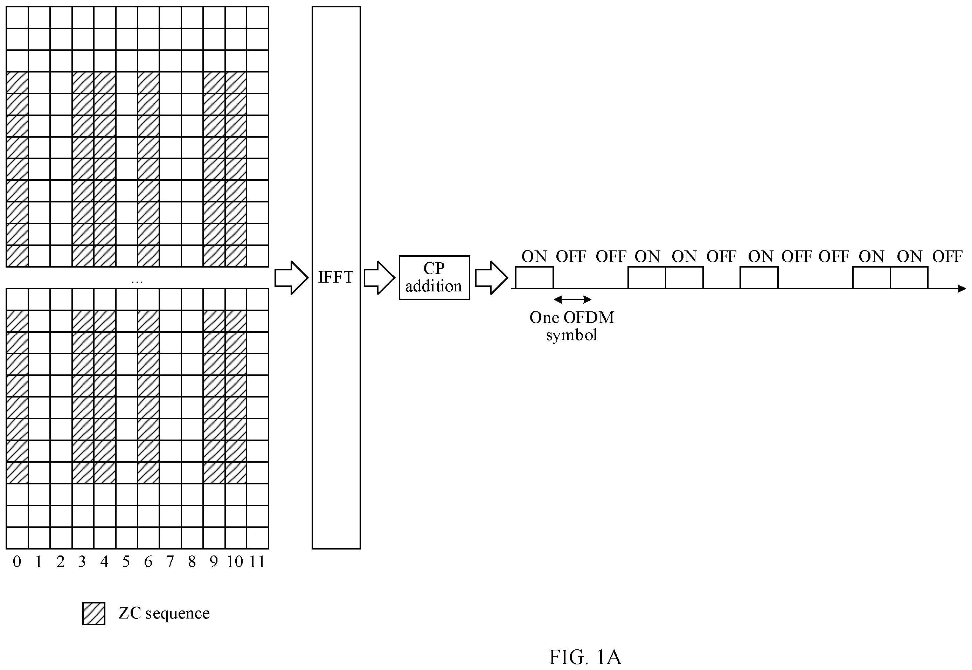

An OOK modulation symbol may be generated in different manners. For example, in one of the manners, an orthogonal frequency division multiplexing (orthogonal frequency division multiplexing, OFDM) transmitter may be used to generate an OOK modulation symbol. To be specific, the OFDM transmitter may use a ZC sequence to generate an OOK modulation symbol representing "1" or "ON (ON)". One OFDM symbol corresponds to one or more OOK modulation symbols. When the OOK modulation symbol "1" or "ON" needs to be transmitted, the OFDM transmitter may map a ZC sequence to a subcarrier of a corresponding OFDM symbol. When an OOK modulation symbol "0" or "OFF" needs to be transmitted, the OFDM transmitter may not modulate a signal on a subcarrier of a corresponding OFDM symbol. In this way, a signal obtained by performing processing, for example, inverse fast Fourier transform (inverse fast Fourier transform, IFFT), on OOK modulation symbols, has energy on some OFDM symbols, representing "ON", and has no energy on other OFDM symbols, representing "OFF". For example, FIG. 1A shows an example of generating an OOK modulation signal by using ZC sequences. Shadow areas on the left side of FIG. 1A represents ZC sequences, and a blank area represents no signal. It can be learned that, in a period of time, an OFDM symbol 0, OFDM symbols 3 and 4, an OFDM symbol 6, and OFDM symbols 9 and 10 carry ZC sequences, and other OFDM symbols do not carry signals. Therefore, for a signal finally transmitted by a transmitter, refer to the right side of FIG. 1A. Positions corresponding to OFDM symbols having ZC sequences represent "ON", and positions corresponding to OFDM symbols having no signal represent "OFF".

In addition to using 'ON'/'OFF' of an OOK signal to transfer information, the transmitter may further use a cyclic shift (cyclic shift, CS) to transfer information, thereby increasing a data rate or improving transmission performance. The cyclic shift means mapping, to the foregoing subcarrier, a sequence obtained by multiplying the foregoing ZC sequence by a cyclic shift sequence. For example, the obtained sequence may be represented as *x_{q}*(m)· *e^{jαm}*, where *e^{jαm}* represents the cyclic shift sequence, *α* represents a cyclic shift, and *x_{q}*(*m*) represents the ZC sequence whose root is q. The transmitter may include different information in different cyclic shifts. For example, a receiving party and a sending party may agree on that a total of four cyclic shifts {*α*₀, *α*₁, *α*₂, *α*₃} can be used, and {*α*₀, *α*₁, *α*₂, *α*₃} respectively represent bit information {00, 01, 10, 11}. In this case, after generating a ZC sequence, the transmitter may further multiply the ZC sequence by a cyclic shift sequence, so that an obtained sequence carries 2-bit (bit) information. In addition to detecting ON/OFF of the OOK signal to receive information, a receiver may further perform cyclic shift detection, to receive information transmitted by using the cyclic shift. In an implementation, the receiver may perform sequence correlation between a received sequence and agreed cyclic shift sequences one by one, and determine a cyclic shift with the highest correlation value as a cyclic shift used for the received sequence.

In another optional manner of generating an OOK modulation symbol, the OOK modulation symbol may alternatively be generated by using a "discrete Fourier transform spread orthogonal frequency division multiplexing (discrete Fourier transform spread orthogonal frequency division multiplexing, DFT-s-OFDM)" transmitter. For example, the DFT-s-OFDM transmitter may use a ZC sequence to generate an OOK modulation symbol representing "1" or "ON (ON)". DFT-s-OFDM may also be considered as a special OFDM symbol that undergoes discrete Fourier transform (discrete Fourier transform, DFT) precoding. One DFT-s-OFDM symbol corresponds to one or more OOK modulation symbols. To be specific, the transmitter may segment one DFT-s-OFDM symbol into one or more symbol segments (segments), and a quantity of segmented symbol segments corresponds to a quantity of OOK modulation symbols. When the OOK modulation symbol "1" or "ON" needs to be transmitted, the transmitter may map a ZC sequence to a corresponding symbol segment. When an OOK modulation symbol "0" or "OFF" needs to be transmitted, the transmitter may not modulate a signal on a corresponding symbol segment. The ZC sequence may be mapped in time domain. In this way, a mapped sequence after DFT is mapped to an allocated subcarrier. Then, an output OOK signal is obtained through processing, for example, inverse fast Fourier transform (inverse fast Fourier transform, IFFT). The OOK signal has energy on some symbol segments, representing "ON", and has no energy on other symbol segments, representing "OFF".

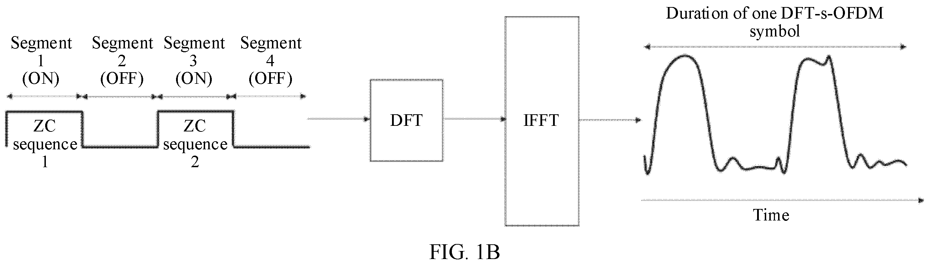

For example, FIG. 1B shows an example in which a DFT-s-OFDM transmitter generates an OOK modulation symbol by using a ZC sequence. In FIG. 1B, for example, the transmitter segments one DFT-s-OFDM symbol into four symbol segments (for example, a segment 1 to a segment 4 in FIG. 1B). A 1^{st} symbol segment and a 3^{rd} symbol segment are 'ON', and a 2^{nd} symbol segment and a 4^{th} symbol 4 segment are 'OFF'. The transmitter sends ZC sequences at positions of the 1^{st} symbol segment and the 3^{rd} symbol segment (for example, sends a ZC sequence 1 in the 1^{st} symbol segment, and sends a ZC sequence 2 in the 3^{rd} symbol segment). The ZC sequences (for example, including the ZC sequence 1 and the ZC sequence 2) undergo processing, for example, DFT and IFFT, to generate a final signal. The final signal is also segmented into four symbol segments. A 1^{st} symbol segment and a 3^{rd} symbol segment are 'ON', and a 2^{nd} symbol segment and a 4^{th} symbol segment are 'OFF'. For each symbol segment, in addition to using 'ON'/'OFF' of an OOK signal to transfer information, the transmitter may further use a cyclic shift to transfer information, thereby increasing a data rate or improving transmission performance. For the DFT-s-OFDM transmitter, the cyclic shift means performing cyclic shift processing on the foregoing ZC sequence before DFT is performed on the foregoing ZC sequence, to obtain a cyclically shifted ZC sequence. The cyclically shifted ZC sequence may be represented as *x̂_{q}*(*m*) = *x_{q}*(*mod*(*m* + Δ,*N_{zc}*)), where *x̃_{q}* (*m*) represents the cyclically shifted ZC sequence, and Δ represents a cyclic shift. The transmitter may include different information in different cyclic shifts. For example, a receiving party and a sending party may agree on that a total of four cyclic shifts {Δ₀, Δ₁, Δ₂, Δ₃} can be used, and {Δ₀, Δ₁, Δ₂, Δ₃} respectively represent bit information {00, 01, 10, 11}. In this case, after generating a ZC sequence, the transmitter may further process the ZC sequence based on a cyclic shift that can be used, so that a processed ZC sequence carries 2-bit information. In addition to detecting ON/OFF of the OOK signal to receive information, a receiver may further perform cyclic shift detection, to receive information transmitted by using the cyclic shift. In an implementation, the receiver may perform sequence correlation between a received sequence and agreed cyclic shift sequences one by one, and determine a cyclic shift with the highest correlation value as a cyclic shift used for the received sequence.

At a signal receiving end, the foregoing envelope detection receiver may be used to demodulate signals. In this case, the envelope detection receiver only needs to simply compare energy on each OFDM symbol of a received signal with a threshold, to determine, through demodulation, whether each OFDM symbol carries "ON" or "OFF". The envelope detection receiver has low power consumption and low costs, but a noise figure (noise figure) of the receiver is usually large, and demodulation performance deteriorates significantly as a noise level increases.

To improve demodulation performance, the signal receiving end may alternatively demodulate signals by using a coherent receiver. The coherent receiver may sample received signals, and perform correlation calculation on sampling results and local ZC sequences to implement demodulation. The local ZC sequence is a ZC sequence that is sent by a signal transmitting end and that is known before the signal receiving end performs synchronization with the signal transmitting end. During demodulation, the coherent receiver may sample received signals. For example, the coherent receiver may truncate a received signal within a range of a detection window (detection window) or a sliding window and perform correlation calculation. The detection window may slide within a specific range, and move by one sampling point each time the detection window slides. Each time the detection window slides, one signal truncation and one correlation calculation may be completed.

For example, in a process of an *l*^{th} sliding of the detection window, a length of a signal truncated by using the detection window includes *N_{sym}* sampling points, and an expression of the truncated signal is: ${r}_{l} \left(n\right) = r \left(l+n\right) , 0 < n \leq {N}_{sym}$ (Formula 5

n is a positive integer. The correlation receiver performs correlation calculation on the truncated signal *rₗ*(*n*) and a local ZC sequence to obtain a correlation value. A process of the correlation calculation is, for example, represented as: $C \left(l\right) = {\sum }_{n = 1}^{{N}_{sym}} {r}_{l} \left(n\right) {s}_{sync}^{∗} \left(n\right)$ (Formula 6)

*C*(*l*) represents the correlation value, *S_{sync}*(*n*) represents the local ZC sequence, and ${s}_{sync}^{∗} \left(n\right)$represents a conjugate of *s_{sync}*(*n*). Each time the detection window slides or each time the detection window slides by one sampling point, a correlation value *C*(*l*) is obtained. When the detection window exactly coincides with the received signal, the correlation value may reach a maximum value ${C}_{max} = {\sum }_{n = 1}^{{N}_{sym}} {s}_{sync} \left(n\right) {s}_{sync}^{∗} \left(n\right) = {\sum }_{n = 1}^{{N}_{sym}} {\left|{s}_{sync}\left(n\right)\right|}^{2}$. In this case, a significant correlation peak appears. |*x*| represents an absolute value of *x*.

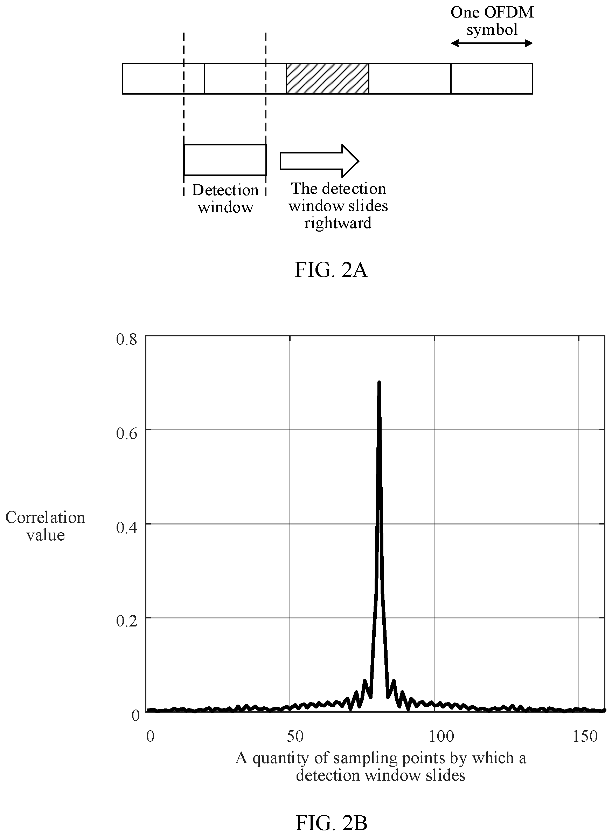

For example, refer to FIG. 2A. A shadow area represents a to-be-detected signal, and a detection window detects the signal through sliding. When the detection window slides to coincide with the signal (that is, positions are aligned), a calculated correlation value may reach a maximum value. FIG. 2B shows a correlation peak corresponding to the correlation value (as shown by the highest point of a curve in FIG. 2B). In FIG. 2B, a horizontal axis represents time or represents a quantity of slides of the detection window, and a vertical axis represents the correlation value.

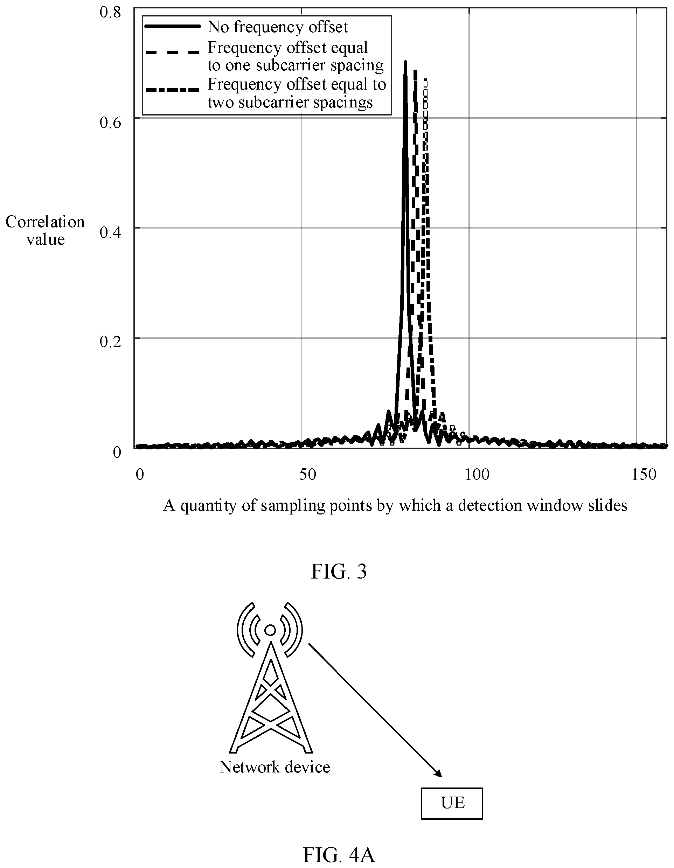

There may be some coherent receivers with low costs and low power consumption in a network. Accuracy of crystal oscillators used by these coherent receivers is poor, and using such crystal oscillators for down-conversion and demodulation may introduce frequency offsets (frequency offsets for short); and if a frequency offset is added to a ZC sequence, a time domain position of the correlation peak may be shifted. When frequency offsets are different, time domain offsets of the correlation peak may be different. For example, FIG. 3 shows time domain offsets of a correlation peak that correspond to different frequency offsets. It can be learned from FIG. 3 that, when there is no frequency offset, the correlation peak does not have a time domain offset, and a time domain offset of the correlation peak corresponding to a frequency offset equal to one subcarrier spacing is less than a time domain offset of the correlation peak corresponding to a frequency offset equal to two subcarrier spacings. If a time domain offset of the correlation peak caused by a frequency offset is large, for example, the correlation peak exceeds a time range of a detection window (that is, a width of the detection window), coherent demodulation may fail.

In view of this, in embodiments of this application, it is considered that a time domain offset of a correlation peak is related to a root of a ZC sequence, and the root of the ZC sequence may affect a position of the correlation peak. The root of the ZC sequence is related to a corresponding parameter (for example, one or more of a bandwidth of a signal, a subcarrier spacing of the signal, or a carrier frequency used for transmission of the signal). Therefore, in embodiments of this application, corresponding roots may be set respectively for different parameters. It may be understood as that the root of the ZC sequence may be adjusted based on the parameter, so that the time domain offset of the correlation peak corresponding to the ZC sequence can be adjusted. In this way, the ZC sequence (or the signal corresponding to the ZC sequence) can be detected by a signal receiving end to the greatest extent, thereby increasing the probability of successful demodulation by the signal receiving end.

The technical solutions provided in embodiments of this application may be applied to a 4G system, for example, a long term evolution (long term evolution, LTE) system, may be applied to a 5G system, for example, a new radio (new radio, NR) system, or may be applied to a next-generation mobile communication system or another similar communication system, for example, a 6th generation (6th generation, 6G) system. This is not specifically limited. In addition, in embodiments of this application, communication between a network device and a UE is used as an example for description. The technical solutions provided in embodiments of this application may also be used for sidelink (sidelink, SL) communication between UEs. For example, the technical solutions may be applied to a D2D scenario, for example, an NR-D2D scenario, or may be applied to a V2X scenario, for example, an NR-V2X scenario. For example, embodiments of this application may be applied to fields such as factory manufacturing, whole-house intelligence, intelligent driving, assisted driving, intelligent connected vehicles, or indoor commercial scenarios.

FIG. 4A is a diagram of an application scenario according to an embodiment of this application. FIG. 4A includes a network device and a UE. A signal transmitted between the network device and the UE may be generated based on a ZC sequence. In FIG. 4A, one UE and one network device are used as an example. In practice, a quantity of UEs is not limited, and a quantity of network devices is also not limited.

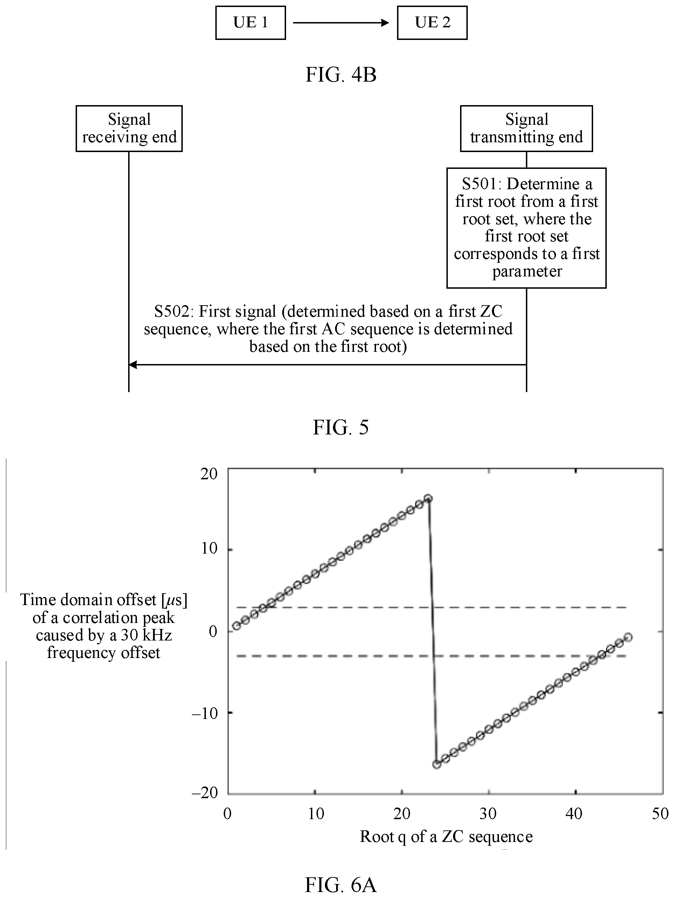

FIG. 4B is a diagram of another application scenario according to an embodiment of this application. FIG. 4B includes a UE 1 and a UE 2. A signal transmitted between the UE 1 and the UE 2 may be generated based on a ZC sequence.

The following describes, with reference to the accompanying drawings, the method provided in embodiments of this application. In the accompanying drawings corresponding to embodiments of this application, all steps represented by dashed lines are optional steps. Embodiments of this specification may be applied to a network architecture shown in FIG. 4A. For example, a signal transmitting end described in embodiments of this specification may be the UE in FIG. 4A, and a signal receiving end described in embodiments of this specification may be the network device in FIG. 4A; or a signal transmitting end described in embodiments of this specification may be the network device in FIG. 4A, and a signal receiving end described in embodiments of this specification may be the UE in FIG. 4A. Alternatively, embodiments of this specification may be applied to a network architecture shown in FIG. 4B. For example, a signal transmitting end described in embodiments of this specification may be the UE 1 in FIG. 4B, and a signal receiving end described in embodiments of this specification may be the UE 2 in FIG. 4B; or a signal transmitting end described in embodiments of this specification may be the UE 2 in FIG. 4B, and a signal receiving end described in embodiments of this specification may be the UE 1 in FIG. 4B.

An embodiment of this application provides a communication method. FIG. 5 is a flowchart of the method.

S501: A signal transmitting end determines a first root.

Optionally, the signal transmitting end may first determine a first root set, and then determine the first root from the first root set. The first root set may include at least one root of a ZC sequence. The ZC sequence herein may be a general ZC sequence, and does not refer to a specific ZC sequence.

Alternatively, the signal transmitting end may directly determine the first root without determining the first root set. For example, the signal transmitting end may determine a parameter set, and may determine the first root based on the parameter set. The parameter set includes, for example, a first set and/or a second set. The first set is, for example, a value set of u described above, and the second set is, for example, a value set of v described above. *u* is a sequence group index, and *v* is a base sequence index. Therefore, the first set may also be referred to as a sequence group index set, and the second set may also be referred to as a base sequence index set. Alternatively, the parameter set may further include a set of other parameters, provided that the parameter is related to a root of the ZC sequence.

In an optional implementation in which the signal transmitting end determines the first root set (or determines the parameter set), the signal transmitting end may receive the first root set (or receive the parameter set) from another device. The another device is, for example, a signal receiving end, or may be a device other than the signal transmitting end and the signal receiving end. For example, the signal transmitting end is a UE, and the signal receiving end is a network device. The network device may send the first root set (or the parameter set) to the UE, and the UE does not need to determine the first root set (or the parameter set) by itself. For example, the network device may send the first root set (or the parameter set) to the UE, so that the UE uses the first root set (or the parameter set). Alternatively, the network device may send information about a correspondence between a root set and a parameter (or information about a correspondence between a parameter set and a parameter) to the UE. The information about the correspondence may include at least one correspondence, each correspondence is a correspondence between one root set and one or more parameters (or each correspondence is a correspondence between one parameter set and one or more parameters). In this case, the UE may determine a corresponding root set (for example, the first root set) or a corresponding parameter set based on a selected parameter (for example, a first parameter).

Alternatively, in another optional implementation in which the signal transmitting end determines the first root set (or the parameter set), the signal transmitting end may determine the first root set (or the parameter set) based on predefined information or preconfigured information. The predefined information is, for example, information predefined in a protocol, and the preconfigured information is, for example, information preconfigured at the signal transmitting end. The predefined information or the preconfigured information includes, for example, information about a correspondence between a parameter and a root set (or includes information about a correspondence between a parameter and a parameter set). In this case, the signal transmitting end may determine the first root set or the parameter set based on the information about the correspondence and a selected parameter (for example, a first parameter).

Alternatively, in still another optional implementation in which the signal transmitting end determines the first root set (or determines the parameter set), the signal transmitting end may determine the first root set (or determine the parameter set) by itself. For example, the signal transmitting end may determine the first root set (or determine the parameter set) based on a first parameter.

In an optional implementation in which the signal transmitting end determines the first root set based on the first parameter, the first root set corresponds to the first parameter, and the signal transmitting end may directly determine the first root set based on the first parameter. Alternatively, in another optional implementation in which the signal transmitting end determines the first root set based on the first parameter, the signal transmitting end may determine the parameter set based on the first parameter, and then determine the first root set based on the parameter set. In this case, it may be considered that the parameter set corresponds to the first parameter.

The parameter set may correspond to the first parameter. Therefore, the signal transmitting end may determine the parameter set based on the first parameter.

The following describes a manner in which the signal transmitting end determines the first root set or the parameter set. In the following descriptions, an example in which the parameter set includes the first set and/or the second set is used.

For an expression of the ZC sequence, refer to Formula 1. If an OOK signal is generated by an OFDM transmitter, the ZC sequence is mapped in frequency domain, to be specific, the transmitter maps the ZC sequence to *N_{zc}* subcarriers (for example, factors such as cyclic extension and cyclic shift are not considered temporarily). If there is a frequency offset of *n*_{Δ} subcarriers, the ZC sequence satisfies the following relationship: $\begin{matrix}{{x}^{˜}}_{q} \left(m\right) = {x}_{q} \left(m-{n}_{Δ}\right) = {e}^{- j \frac{πq \left(m-{n}_{Δ}\right) \left(m+1-{n}_{Δ}\right)}{{N}_{ZC}}} = {e}^{j \frac{πq \left[{n}_{Δ}-{n}_{Δ}^{2}\right]}{{N}_{ZC}}} {e}^{- j \frac{πqm \left(m+1\right)}{{N}_{ZC}}} {e}^{j \frac{2 {πqmn}_{Δ}}{{N}_{ZC}}} = \\ {e}^{j \frac{πq \left[{n}_{Δ}-{n}_{Δ}^{2}\right]}{{N}_{ZC}}} {x}_{q} \left(m\right) {e}^{j \frac{2 {πqmn}_{Δ}}{{N}_{ZC}}}\end{matrix}$ (Formula 7)

In Formula 7, *x̃_{q}*(*m*) represents a ZC sequence with a frequency offset, and e ${e}^{j \frac{2 {πqmn}_{Δ}}{{N}_{ZC}}}$ may cause a time domain offset of the time domain signal, where a value of the time domain offset satisfies the following: $Δ T = mod \left(\frac{{qn}_{Δ}}{{N}_{zc} Δ f}, \frac{1}{Δ f}\right)$ (Formula 8)

In Formula 8, Δ*T* represents the time domain offset of the time domain signal (the time domain offset may cause an offset of a correlation peak of sliding correlation, and in this embodiment of this application, for example, the time domain signal is a first signal to be described below), mod represents a mod operation or a modulo operation, Δ*f* represents a subcarrier spacing of the signal, and *N_{zc}*Δ*f* represents a bandwidth of the signal. When the signal receiving end performs coherent demodulation, a correlation peak may have a time domain offset. If the time domain offset is excessively large, a sliding range of a detection window may be exceeded. The sliding range of the detection window means that the detection window may slide within the sliding range.

Alternatively, if an OOK signal is generated by using a DFT-s-OFDM transmitter, the ZC sequence may be mapped in time domain. It may be understood as that the ZC sequence may be mapped to a symbol segment before DFT. If there is a frequency offset of *n*_{Δ} subcarriers, a time offset of the time domain signal may also be caused, and a value of the time domain offset satisfies the following: $\left\{\begin{matrix}Δ T = \frac{{n}_{o}}{Δ {fN}_{zc} {N}_{seg}} \\ \left({kn}_{o}q-{kn}_{Δ}\right) {modN}_{ZC} = 0\end{matrix}\right.$ (Formula 12)

*nₒ* represents a quantity of sampling points of the time offset. *N_{seg}* represents a quantity of symbol segments. *k* represents a constant, and the constant is, for example, an integer. For example, k=2. For other parameters in Formula 12, refer to the descriptions of the parameters in Formula 8. When the signal receiving end performs coherent demodulation, a correlation peak may have a time domain offset. If the time domain offset is excessively large, the sliding range of the detection window may be exceeded. The sliding range of the detection window means that the detection window may slide within the sliding range, or is understood as a range within which the detection window can move. For example, it is specified that the detection window cannot move out of the range.

In this embodiment of this application, design may be performed according to Formula 8 or Formula 12. For different parameters, roots (or root sets) corresponding to ZC sequences may be set, or u and/or v corresponding to the ZC sequences may be set. For example, in a preset tolerable maximum frequency offset, a time domain offset calculated by substituting any root q (or any u and/or v) in the root set (or the first set and/or the second set) designed in this embodiment of this application into Formula 8 or Formula 12 is within a preset sliding range of the detection window. When a to-be-sent signal or a ZC sequence uses a corresponding parameter, the ZC sequence may use a root in a root set corresponding to the parameter, or use u in a first set corresponding to the parameter and/or v in a second set corresponding to the parameter. When a ZC sequence uses a root in a root set corresponding to a parameter of the ZC sequence (or a parameter of a signal generated based on the ZC sequence), or when a ZC sequence uses u in a first set corresponding to a parameter of the ZC sequence and/or v in a second set corresponding to a parameter of the ZC sequence (or a parameter of a signal generated based on the ZC sequence), a frequency offset of the ZC sequence may be reduced, or a time domain shift of a correlation peak of the ZC sequence caused by the frequency offset may be reduced, so that the correlation peak of the ZC sequence can be detected by the signal receiving end, thereby increasing a demodulation success rate. For example, in this embodiment of this application, roots corresponding to ZC sequences may be set respectively for different parameters; or in this embodiment of this application, first sets and/or second sets may be set respectively for different parameters, to indirectly set the roots of the ZC sequences respectively. The parameter includes, for example, one or more of the following: a bandwidth of a signal, a length of a ZC sequence, a carrier frequency used for transmission of a signal, or a subcarrier spacing of a signal. The signal is a signal generated based on the ZC sequence. For example, a parameter or some parameters may correspond to one or more roots, and the one or more roots are, for example, included in one root set. In this case, it may also be considered that, in this embodiment of this application, root sets of ZC sequences may be set respectively for different parameters, and each root set may include at least one root.

For another example, a parameter or some parameters may correspond to one or more u and/or one or more v. The one or more u are, for example, included in a set, and the set is the first set. The one or more v are, for example, also included in a set, and the set is the second set. In this case, it may also be considered that, in this embodiment of this application, first sets and/or second sets of ZC sequences may be set respectively for different parameters. Each first set may include at least one value of u or include at least one u, and each second set may include at least one value of v or include at least one v. Optionally, a root q may be obtained based on any u in the first set and any v in the second set. In this case, roots q obtained based on a combination of all or some u in the first set and all or some v in the second set may form a set, and the set is, for example, the first root set.

It can be learned from Formula 8 or Formula 12 that when bandwidths *N_{zc}*Δ*f* of the signal are different, time domain offsets Δ*T* are different for a same frequency offset *n*_{Δ}. Alternatively, the root of the ZC sequence may be set based on the length of the ZC sequence, because it can be learned from Formula 8 or Formula 12 that when lengths *N_{zc}* of ZC sequences are different, time domain offsets Δ*T* are different for a same frequency offset *n*_{Δ}. The time domain offset may be understood as a time domain shift of a correlation peak. Therefore, a parameter corresponding to the root set may include the bandwidth of the signal and/or the length of the ZC sequence. For example, the first parameter corresponds to the first root set (or the first parameter corresponds to the first set and/or the second set), and the first parameter may include a bandwidth of the first signal and/or a length of a first ZC sequence.

Similarly, when a symbol is segmented into symbol segments in time, a quantity *N_{seg}* of symbol segments may affect *N_{seg}* and the length *N_{zc}* of the ZC sequence. When quantities of symbol segments of the signal are different, time domain offsets Δ*T* may be different for a same frequency offset *n*_{Δ} and a same root q. The time domain offset may be understood as a time domain shift of a correlation peak. Therefore, a parameter corresponding to the root set may include the quantity of symbol segments of the signal and/or the length of the ZC sequence. For example, the first parameter corresponds to the first root set (or the first parameter corresponds to the first set and/or the second set), and the first parameter may include a quantity of symbol segments of the first signal and/or the length of the first ZC sequence.

Formula 8 or Formula 12 further involves the subcarrier spacing Δ*f*. When subcarrier spacings and bandwidths of the signal (or lengths of the ZC sequence) are different, time domain offsets Δ*T* are different for a same frequency offset *n*_{Δ}. Therefore, optionally, a parameter corresponding to the root set (or the first set and/or the second set) may include the subcarrier spacing of the signal. For example, the first parameter may include a subcarrier spacing of the first signal.

For the signal receiving end, even if crystal oscillators of same accuracy are used, if carrier frequencies used during transmission of the signal received by the signal receiving end are different, frequency offsets of the signal (or the ZC sequence) may also be different. For example, if the carrier frequency used for signal transmission is 800 MHz, a crystal oscillator with a 10 parts per million (parts per million, PPM) frequency offset may cause an 8 kHz frequency offset. However, if the carrier frequency used for signal transmission is 4 GHz, a crystal oscillator with a 10 PPM frequency offset may cause a 40 kHz frequency offset. Therefore, optionally, a parameter corresponding to the root set may include the carrier frequency used for signal transmission, or may also be referred to as a carrier frequency used for transmission of a signal. For example, the first parameter may include a carrier frequency used for transmission of the first signal.

In an optional implementation of the first parameter, the first parameter includes the bandwidth of the first signal and/or includes the length of the first ZC sequence. For example, if the bandwidth of the first signal is W1, the corresponding first root set is S1 (or the corresponding first set is U1, and the corresponding second set is V1); or if the bandwidth of the first signal is W2, the corresponding first root set is S2 (or the corresponding first set is U2, and the corresponding second set is V2). Alternatively, if the length of the first ZC sequence is L1, the corresponding first root set is S1 (or the corresponding first set is U1, and the corresponding second set is V1); or if the length of the first ZC sequence is L2, the corresponding first root set is S2 (or the corresponding first set is U2, and the corresponding second set is V2). W1 is different from W2, L1 is different from L2, and S1 is the same as or different from S2. Alternatively, W1 is different from W2, L1 is different from L2, U1 is the same as or different from U2, and V1 is the same as or different from V2.

That S1 is different from S2 may include one or more of the following: A quantity of roots included in S1 is different from a quantity of roots included in S2; at least one root included in S1 is different from a root included in S2; or a function used to determine a root in S1 is different from a function used to determine a root in S2, or a function used to determine S1 is different from a function used to determine S2. For example, S1 includes 10 roots, and S2 includes 11 roots, indicating that S1 is different from S2. The 10 roots may or may not have an intersection with the 11 roots. For another example, S1 includes at least one root that is not included in S2, and/or S2 includes at least one root that is not included in S1, indicating that S1 is different from S2. For another example, the function used to determine a root in S1 is f3(x), the function used to determine a root in S2 is f4(x), and f3(x) is different from f4(x). In the foregoing examples, root sets are all determined according to Formula 8, which may be considered as that functions used to determine different root sets are the same. However, in another implementation, functions used to determine root sets corresponding to different parameters may be different. For example, the first root set corresponding to the first parameter is determined according to Formula 8, and a root set corresponding to another parameter may be determined according to another formula. This is not limited in this embodiment of this application.

Correspondingly, that S1 is the same as S2 may include: A quantity of roots included in S1 is the same as a quantity of roots included in S2; all roots included in S1 are included in S2, and all roots included in S2 are included in S1; and a function used to determine a root in S1 is the same as a function used to determine a root in S2, or a function used to determine S1 is the same as a function used to determine S2.

That U1 is different from U2 may include one or more of the following: A quantity of sequence group indexes included in U1 (for example, a quantity of u included in U1 or a quantity of values of u included in U1) is different from a quantity of sequence group indexes included in U2; U1 includes at least one sequence group index that is different from a sequence group index included in U2; a function used to determine a sequence group index in U1 is different from a function used to determine a sequence group index in U2; or a function used to determine U1 is different from a function used to determine U2. For example, U1 includes 10 sequence group indexes, and U2 includes 11 sequence group indexes, indicating that U1 is different from U2. The 10 sequence groups may or may not have an intersection with the 11 sequence groups. For another example, U1 includes at least one sequence group index that is not included in U2, and/or U2 includes at least one sequence group index that is not included in U1, indicating that U1 is different from U2. For another example, the function used to determine a sequence group index in U1 is f1(x), the function used to determine a sequence group index in U2 is f2(x), and f1(x) is different from f2(x).

Correspondingly, that U1 is the same as U2 may include: A quantity of sequence group indexes included in U1 is the same as a quantity of sequence group indexes included in U2; all sequence group indexes included in U1 are included in U2, and all sequence group indexes included in U2 are included in U1; and a function used to determine a sequence group index in U1 is the same as a function used to determine a sequence group index in U2, or a function used to determine U1 is the same as a function used to determine U2.

That V1 is different from V2 may include one or more of the following: A quantity of base sequence indexes included in V1 is different from a quantity of base sequence indexes included in V2; V1 includes at least one base sequence index that is different from a base sequence index included in V2; a function used to determine a base sequence index in V1 is different from a function used to determine a base sequence index in V2; or a function used to determine V1 is different from a function used to determine V2. For example, V1 includes two base sequence indexes, and V2 includes one base sequence index, indicating that V1 is different from V2. The two base sequence indexes may or may not have an intersection with the one base sequence index. For another example, V1 includes at least one base sequence index that is not included in V2, and/or V2 includes at least one base sequence index that is not included in V1, indicating that V1 is different from V2. For another example, the function used to determine a base sequence index in V1 is f5(x), the function used to determine a base sequence index in V2 is f6(x), and f5(x) is different from f6(x).

Correspondingly, that V1 is the same as V2 may include: A quantity of base sequence indexes included in V1 is the same as a quantity of base sequence indexes included in V2; all base sequence indexes included in V1 are included in V2, and all base sequence indexes included in V2 are included in V1; and a function used to determine a base sequence index in V1 is the same as a function used to determine a base sequence index in V2, or a function used to determine V1 is the same as a function used to determine V2.

For example, if the bandwidth of the first signal is 1.44 MHz, or the length of the first ZC sequence is 47, the first root set corresponding to the first parameter may include {1,2,3,4}∪{43,44,45,46}. Alternatively, if the bandwidth of the first signal is 2.88 MHz, or the length of the first ZC sequence is 89, the first root set may include {1,2,3,4,5,6,7,8}∪{81,82,83,84,85,87,87,88}. Alternatively, if the bandwidth of the first signal is 4.32 MHz, or the length of the first ZC sequence is 139, the first root set may include {1,2,3,4,5,6,7,8,9,10,11,12}∪{127,128,129,130,131,132,133,134,135,136,137,138} . ∪ represents calculating a union set. For example, the first root set may be determined according to Formula 8. Formula 8 further involves the subcarrier spacing corresponding to the first signal. For example, a default subcarrier spacing is used for calculation. The default subcarrier spacing is, for example, 30 kHz, 15 kHz, or 60 kHz. This is not limited.

Optionally, the first root set corresponding to the first parameter or the first set and/or the second set corresponding to the first parameter may be determined based on a corresponding parameter or by considering a corresponding design principle. For example, a design principle includes: determining the first root set or determining the first set and/or the second set based on a maximum frequency offset allowed by the signal receiving end and/or the sliding range of the detection window of the signal receiving end. Considering the first root set determined based on the maximum frequency offset allowed by the signal receiving end and/or the sliding range of the detection window and a ZC sequence generated based on a root in the first root set, a time domain shift of a correlation peak at the signal receiving end may be within a time domain offset range allowed by the signal receiving end. Alternatively, considering the first set and/or the second set determined based on the maximum frequency offset allowed by the signal receiving end and/or the sliding range of the detection window and a ZC sequence generated based on a root determined based on the first set and/or the second set, a time domain shift of a correlation peak at the signal receiving end may be within a time domain offset range allowed by the signal receiving end. The time domain offset range allowed by the signal receiving end is, for example, the sliding range of the detection window used by the signal receiving end. Therefore, when the signal receiving end performs sliding for sampling by using the detection window, the correlation peak can be within the sliding range of the detection window, and can be detected by the detection window, thereby increasing the probability of successful demodulation by the signal receiving end. Therefore, it may also be considered that the first parameter includes the sliding range of the detection window. For example, the first parameter includes one or more of the following: the bandwidth of the first signal, the length of the first ZC sequence, the quantity of symbol segments of the first signal, the carrier frequency used for transmission of the first signal, the subcarrier spacing of the first signal, the maximum frequency offset allowed by the signal receiving end, or the sliding range of the detection window of the signal receiving end.

For example, the maximum frequency offset allowed by the signal receiving end is 30 kHz. In addition, the sliding range of the detection window of the signal receiving end (also referred to as a range of the detection window for short below, for example, a width of the detection window) is [-3*µs*, 3*µs*], that is, a time domain offset range of the correlation peak detected by the signal receiving end needs to be within [-3*µs*, 3*µs*]. The bandwidth of the first signal is four resource blocks (resource blocks, RBs), that is, 1.44 MHz. The first root set may be determined according to Formula 8. When the first root set is determined according to Formula 8, [-3*µs*, 3*µs*] may be substituted into Δ*T* in Formula 8 (to be specific, the range of the detection window may be used as a maximum time domain offset of the first signal, to determine a corresponding root set), 1.44 MHz may be substituted into *N_{zc}*Δ*f* in Formula 8, and a quantity of subcarriers corresponding to 30 kHz (the maximum frequency offset allowed by the signal receiving end) may be substituted into *n*_{Δ} in Formula 8, to determine the root q in the first root set.

For example, FIG. 6A may be obtained according to Formula 8 and values of the foregoing parameters. In FIG. 6A, a horizontal coordinate represents the root of the ZC sequence, that is, represents q, and a vertical coordinate represents the time domain offset of the correlation peak. It can be learned from FIG. 6A that, when the root of the ZC sequence includes {1,2,3,4}∪{43,44,45,46}, the time domain offset of the correlation peak is within [-3*µs*, 3*µs*] (for the range of the time domain offset, refer to a range shown by two dashed lines in the middle in FIG. 6A), and does not exceed the range of the detection window. However, if the root of the ZC sequence is another value outside the foregoing set, the time domain offset of the correlation peak may not be within [-3*µs*, 3*µs*] , but may exceed the range of the detection window. Therefore, it may be determined that if the bandwidth of the first signal is 1.44 MHz, the first root set corresponding to the first parameter may include {1,2,3,4}∪{43,44,45,46}.

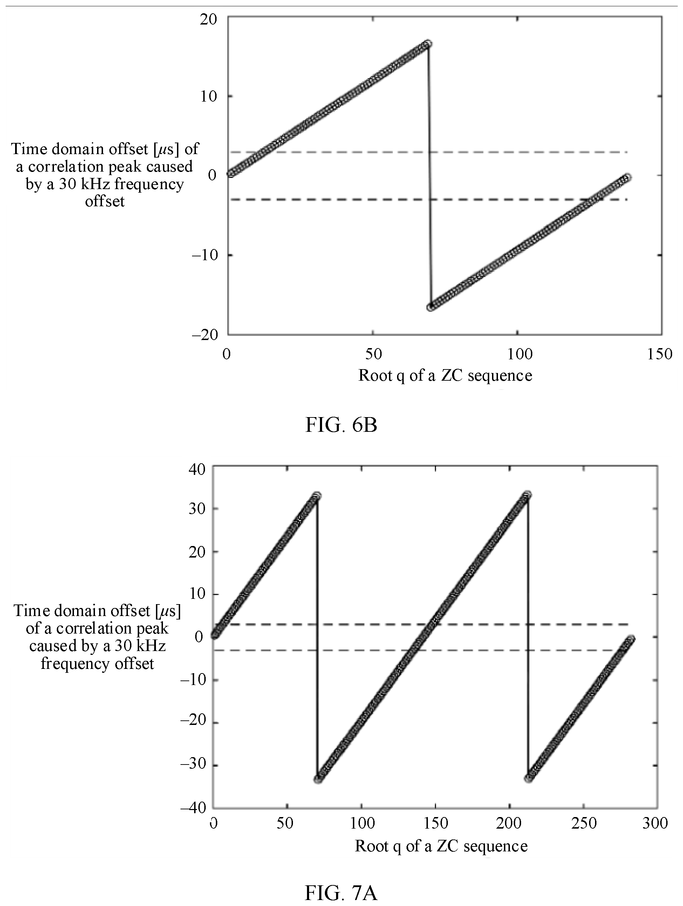

For another example, the foregoing design principle is still used, but the bandwidth of the first signal is 12 RBs, that is, 4.32 MHz. In this case, the first root set may be determined according to Formula 8. When the root in the first root set is determined according to Formula 8, [-3*µs*, 3*µs*] may be substituted into Δ*T* in Formula 8, 4.32 MHz may be substituted into *N_{zc}*Δ*f* in Formula 8, and the quantity of subcarriers corresponding to 30 kHz (the maximum frequency offset allowed by the signal receiving end) may be substituted into *n*_{Δ} in Formula 8, to determine q. For example, FIG. 6B may be obtained according to Formula 8 and values of the foregoing parameters. In FIG. 6B, a horizontal coordinate represents the root of the ZC sequence, that is, represents q, and a vertical coordinate represents the time domain offset of the correlation peak. It can be learned from FIG. 6B that, when the root of the ZC sequence includes {1,2,3,4,5,6,7,8,9,10,11,12}∪{127,128,129,130,131,132,133,134,135,136,137,138}, the time domain offset of the correlation peak is within [-3*µs*, 3*µs*] (for the range of the time domain offset, refer to a range shown by two dashed lines in the middle in FIG. 6B), and does not exceed the range of the detection window. However, if the root of the ZC sequence is another value outside the foregoing set, the time domain offset of the correlation peak may not be within [-3*µs*, 3*µs*], but may exceed the range of the detection window. Therefore, it may be determined that if the bandwidth of the first signal is 4.32 MHz, the first root set corresponding to the first parameter may include {1,2,3,4,5,6,7,8,9,10,11,12}∪{127,128,129,130,131,132,133,134,135,136,137,138}.

In another optional implementation of the first parameter, the first parameter may include the quantity of symbol segments. For example, if the quantity of symbol segments of the first signal is N1, the corresponding first root set is S7 (or the corresponding first set is U7, and the corresponding second set is V7); or if the quantity of symbol segments of the first signal is N2, the corresponding first root set is S8 (or the corresponding first set is U8, and the corresponding second set is V8). Alternatively, if the length of the first ZC sequence is L1, the corresponding first root set is S7 (or the corresponding first set is U7, and the corresponding second set is V7); or if the length of the first ZC sequence is L2, the corresponding first root set is S8 (or the corresponding first set is U8, and the corresponding second set is V8). N1 is different from N2, L1 is different from L2, and S7 is the same as or different from S8. Alternatively, N1 is different from N2, L1 is different from L2, U7 is the same as or different from U8, and V7 is the same as or different from V8.

For example, if the bandwidth of the first signal is 11 RBs, and the quantity of symbol segments is 1, the length of the first ZC sequence is 127, and in this case, the first root set corresponding to the first parameter may include {1, 32, 42, 63, 64, 85, 95, 126}. For another example, if the bandwidth of the first signal is 11 RBs, and the quantity of symbol segments is 4, the length of the first ZC sequence is 31, and in this case, the first root set may include {1, 8, 10, 15, 16, 21, 23, 30}. For example, the first root set may be determined according to Formula 12. Formula 12 further involves the subcarrier spacing corresponding to the first signal. For example, a default subcarrier spacing is used for calculation. The default subcarrier spacing is, for example, 30 kHz, 15 kHz, or 60 kHz. This is not limited.

Optionally, the first root set corresponding to the first parameter or the first set and/or the second set corresponding to the first parameter may be determined based on a corresponding parameter or by considering a corresponding design principle. For example, a design principle includes: determining the first root set or determining the first set and/or the second set based on a maximum frequency offset allowed by the signal receiving end and/or the sliding range of the detection window of the signal receiving end. Considering the first root set determined based on the maximum frequency offset allowed by the signal receiving end and/or the sliding range of the detection window and a ZC sequence generated based on a root in the first root set, a time domain shift of a correlation peak at the signal receiving end may be within a time domain offset range allowed by the signal receiving end. Alternatively, considering the first set and/or the second set determined based on the maximum frequency offset allowed by the signal receiving end and/or the sliding range of the detection window and a ZC sequence generated based on a root determined based on the first set and/or the second set, a time domain shift of a correlation peak at the signal receiving end may be within a time domain offset range allowed by the signal receiving end. The time domain offset range allowed by the signal receiving end is, for example, the sliding range of the detection window used by the signal receiving end. Therefore, when the signal receiving end performs sliding for sampling by using the detection window, the correlation peak can be within the sliding range of the detection window, and can be detected by the detection window, thereby increasing the probability of successful demodulation by the signal receiving end. Therefore, it may also be considered that the first parameter includes the sliding range of the detection window. For example, the first parameter includes one or more of the following: the quantity of symbol segments of the first signal, the length of the first ZC sequence, the carrier frequency used for transmission of the first signal, the subcarrier spacing of the first signal, the maximum frequency offset allowed by the signal receiving end, or the sliding range of the detection window of the signal receiving end.

For example, the maximum frequency offset allowed by the signal receiving end is 30 kHz. In addition, the sliding range of the detection window of the signal receiving end (also referred to as a range of the detection window for short below, for example, a width of the detection window) is [-3*µs*, 3*µs*], that is, a time domain offset range of the correlation peak detected by the signal receiving end needs to be within [-3*µs*, 3*µs*]. The bandwidth of the first signal is 11 RBs, that is, 3.96 MHz, and the quantity of symbol segments is 2. The first root set may be determined according to Formula 12. When the first root set is determined according to Formula 12, [-3*µs*, 3*µs*] may be substituted into Δ*T* in Formula 12 (to be specific, the range of the detection window may be used as a maximum time domain offset of the first signal, to determine a corresponding root set), 3.96 MHz may be substituted into *N_{zc}*Δ*f* in Formula 12, the quantity of subcarriers corresponding to 30 kHz (the maximum frequency offset allowed by the signal receiving end) may be substituted into *n*_{Δ} in Formula 12, and the quantity 2 of symbol segments may be substituted into *N_{seg}* in Formula 12, to determine the root q in the first root set.

In another optional implementation of the first parameter, the first parameter includes the subcarrier spacing of the first signal. For example, if the subcarrier spacing of the first signal is c1, the corresponding first root set is S3 (or the corresponding first set is U3, and the corresponding second set is V3); or if the subcarrier spacing of the first signal is c2, the corresponding first root set is S4 (or the corresponding first set is U4, and the corresponding second set is V4). c1 is different from c2, and S3 is the same as or different from S4. Alternatively, c1 is different from c2, U3 is the same as or different from U4, and V3 is the same as or different from V4. For an understanding of S3 being different from S4, refer to the foregoing descriptions of S1 and S2. For an understanding of U3 being different from U4, refer to the foregoing descriptions of U1 and U2. For an understanding of V3 being different from V4, refer to the foregoing descriptions of V1 and V2.

An example in which the first parameter includes the bandwidth of the first signal and/or the length of the first ZC sequence, and includes the subcarrier spacing of the first signal is used. For example, if the bandwidth of the first signal is 4.32 MHz or the length of the first ZC sequence is 283, and the subcarrier spacing corresponding to the first signal is 15 kHz, the first root set corresponding to the first parameter may include {1,2,3,4,5,6}∪{136,137,138,139,140,141,142,143,144,145,146,147}∪{277,278,279,280,281,282} . Alternatively, if the bandwidth of the first signal is 4.32 MHz or the length of the first ZC sequence is 139, and the subcarrier spacing corresponding to the first signal is 30 kHz, the first root set corresponding to the first parameter may include {1,2,3,4,5,6,7,8,9,10,11,12}∪{127,128,129,130,131,132,133,134,135,136,137,138}.

Optionally, the first root set corresponding to the first parameter or the first set and/or the second set corresponding to the first parameter may be determined based on a corresponding parameter or by considering a corresponding design principle. For example, a design principle includes: determining the first root set based on a maximum frequency offset allowed by the signal receiving end and/or the range of the detection window of the signal receiving end. Therefore, it may also be considered that the first parameter includes the range of the detection window. For example, the first parameter includes one or more of the following: the bandwidth of the first signal, the length of the first ZC sequence, the carrier frequency used for transmission of the first signal, the subcarrier spacing of the first signal, the maximum frequency offset allowed by the signal receiving end, or the range of the detection window of the signal receiving end.

For example, the maximum frequency offset allowed by the signal receiving end is 30 kHz. In addition, the range of the detection window of the signal receiving end is [-3*µs*, 3*µs*], that is, a time domain offset range of the correlation peak detected by the signal receiving end needs to be within [-3*µs*, 3*µs*]. The bandwidth of the first signal is 12 RBs, that is, 4.32 MHz, and the subcarrier spacing corresponding to the first signal is 15 kHz. The first root set may be determined according to Formula 8. When the first root set is determined according to Formula 8, [-3*µs*, 3*µs*] may be substituted into Δ*T* in Formula 8, 4.32 MHz may be substituted into *N_{zc}*Δ*f* in Formula 8, the quantity of subcarriers corresponding to 30 kHz (the maximum frequency offset allowed by the signal receiving end) may be substituted into *n*_{Δ} in Formula 8, and 15 kHz (the subcarrier spacing) may be substituted into Δ*f* in Formula 8, to determine the root q in the first root set. Therefore, it may also be considered that the first parameter includes the range of the detection window. For example, the first parameter includes one or more of the following: the bandwidth of the first signal, the length of the first ZC sequence, the carrier frequency used for transmission of the first signal, the subcarrier spacing of the first signal, or the range of the detection window of the signal receiving end.

For example, FIG. 7A may be obtained according to Formula 8 and values of the foregoing parameters. In FIG. 7A, a horizontal coordinate represents the root of the ZC sequence, that is, represents q, and a vertical coordinate represents the time domain offset of the correlation peak. It can be learned from FIG. 7A that, when the root of the ZC sequence includes {1,2,3,4,5,6}∪{136,137,138,139,140,141,142,143,144,145,146,147}∪{277,278,279,280,281,282} , the time domain offset of the correlation peak is within [-3*µs*, 3*µs*] (for the range of the time domain offset, refer to a range shown by two dashed lines in the middle in FIG. 7A), and does not exceed the range of the detection window. However, if the root of the ZC sequence is another value outside the foregoing set, the time domain offset of the correlation peak may not be within [-3*µs*, 3*µs*], but may exceed the range of the detection window. Therefore, it may be determined that if the bandwidth of the first signal is 1.44 MHz, and the subcarrier spacing corresponding to the first signal is 15 kHz, the first root set corresponding to the first parameter may include {1,2,3,4,5,6}∪{136,137,138,139,140,141,142,143,144,145,146,147}∪{277,278,279,280,281,282}.

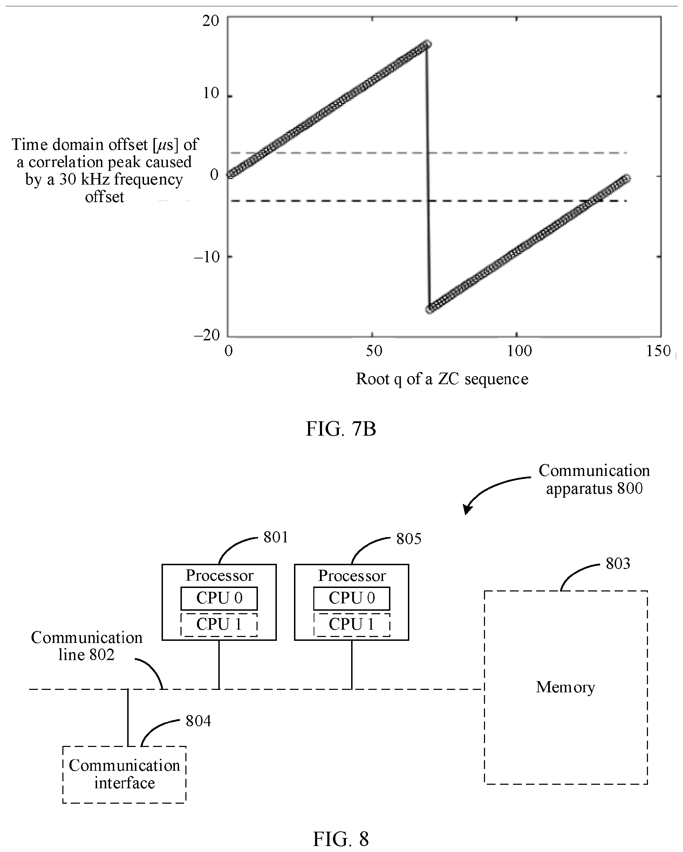

For another example, the foregoing design principle is still used, the bandwidth of the first signal is 12 RBs, that is, 4.32 MHz, and the subcarrier spacing corresponding to the first signal is 30 kHz. In this case, the first root set may be determined according to Formula 8. When the first root set is determined according to Formula 8, [-3*µs*, 3*µs*] may be substituted into Δ*T* in Formula 8, 4.32 MHz may be substituted into *N_{zc}*Δ*f* in Formula 8, the quantity of subcarriers corresponding to 30 kHz (the maximum frequency offset allowed by the signal receiving end) may be substituted into *n*_{Δ} in Formula 8, and 30 kHz (the subcarrier spacing) may be substituted into Δ*f* in Formula 8, to determine the root q in the first root set. For example, FIG. 7B may be obtained according to Formula 8 and values of the foregoing parameters. In FIG. 7B, a horizontal coordinate represents the root of the ZC sequence, and a vertical coordinate represents the time domain offset of the correlation peak. It can be learned from FIG. 7B that, when the root of the ZC sequence includes {1,2,3,4,5,6,7,8,9,10,11,12}∪{127,128,129,130,131,132,133,134,135,136,137,138}, the time domain offset of the correlation peak is within [-3*µs*, 3*µs*] (for the range of the time domain offset, refer to a range shown by two dashed lines in the middle in FIG. 7B), and does not exceed the range of the detection window. However, if the root of the ZC sequence is another value outside the foregoing set, the time domain offset of the correlation peak may not be within [-3*µs*, 3*µs*], but may exceed the range of the detection window. Therefore, it may be determined that if the bandwidth of the first signal is 4.32 MHz, and the subcarrier spacing corresponding to the first signal is 30 kHz, the first root set corresponding to the first parameter may include {1,2,3,4,5,6,7,8,9,10,11,12}∪{127,128,129,130,131,132,133,134,135,136,137,138}.

In still another optional implementation of the first parameter, the first parameter includes the carrier frequency used for transmission of the first signal. For example, if the carrier frequency used for transmission of the first signal is f1, the corresponding first root set is S5 (or the corresponding first set is U5, and the corresponding second set is V5); or if the carrier frequency used for transmission of the first signal is f2, the corresponding first root set is S6 (or the corresponding first set is U6, and the corresponding second set is V6). f1 is different from f2, and S5 is the same as or different from S6. Alternatively, f1 is different from f2, U5 is the same as or different from U6, and V5 is the same as or different from V6. For an understanding of S5 being different from S6, refer to the foregoing descriptions of S1 and S2. For an understanding of U5 being different from U6, refer to the foregoing descriptions of U1 and U2. For an understanding of V5 being different from V6, refer to the foregoing descriptions of V1 and V2.

Corresponding root sets may be set respectively for different signal frequencies, or corresponding root sets may be set respectively for different frequency ranges. If corresponding root sets are set respectively for different frequency ranges, it may also be considered that the first parameter includes the carrier frequency used for transmission of the first signal, and/or includes a frequency range within which the carrier frequency used for transmission of the first signal falls. One frequency range may include one or more frequencies, and the one or more frequencies may be consecutive or inconsecutive. For example, two frequency ranges may be obtained through division where a frequency range 1 is [1, 3] GHz, and a frequency range 2 is (3, 6] GHz; or a frequency range 1 is [1, 3) GHz, and a frequency range 2 is [3, 6] GHz. Corresponding root sets may be determined respectively for different frequencies or frequency ranges. For example, Table 1 shows root sets corresponding to the frequency range 1. In Table 1, an example in which the first parameter includes the bandwidth of the first signal, the subcarrier spacing of the first signal, and the carrier frequency used for transmission of the first signal is used. Table 1 includes all or some root sets corresponding to the frequency range 1, or Table 1 includes all or some first sets corresponding to the frequency range 1 and all or some second sets corresponding to the frequency range 1.

**Table 1**

| Subcarrier spacing | Signal bandwidth | | |
|---|---|---|---|
| | 4 RBs | 8 RBs | 12 RBs |
| 15 kHz | Root set 1 (or first set 1 and second set 1) | Root set 2 (or first set 2 and second set 2) | Root set 3 (or first set 3 and second set 3) |
| 30 kHz | Root set 4 (or first set 4 and second set 4) | Root set 5 (or first set 5 and second set 5) | Root set 6 (or first set 6 and second set 6) |

Table 2 shows root sets corresponding to the frequency range 2, or Table 2 may be understood as showing a correspondence between parameters and root sets. In Table 2, the example in which the first parameter includes the bandwidth of the first signal, the subcarrier spacing of the first signal, and the carrier frequency used for transmission of the first signal is also used. Table 2 includes all or some root sets corresponding to the frequency range 2, or Table 2 includes all or some first sets corresponding to the frequency range 2 and all or some second sets corresponding to the frequency range 2.

**Table 2**

| Subcarrier spacing | Signal bandwidth | | |
|---|---|---|---|
| | 4 RBs | 8 RBs | 12 RBs |
| 15 kHz | Root set 7 (or first set 7 and second set 7) | Root set 8 (or first set 8 and second set 8) | Root set 9 (or first set 9 and second set 9) |
| 30 kHz | Root set 10 (or first set 10 and second set 10) | Root set 11 (or first set 11 and second set 11) | Root set 12 (or first set 12 and second set 12) |

For different frequencies or frequency ranges, a same signal bandwidth or a same ZC sequence length and a same subcarrier spacing correspond to a same root set or different root sets. For example, both the root set 1 and the root set 7 correspond to the signal bandwidth of four RBs, and correspond to the subcarrier spacing of 15 kHz, but correspond to different frequencies or frequency ranges. Therefore, the two root sets may be the same or different.

Alternatively, for different frequencies or frequency ranges, a same signal bandwidth or a same ZC sequence length and a same subcarrier spacing correspond to a same first set or different first sets, and correspond to a same second set or different second sets. For example, the first set 1 and the second set 1 correspond to the signal bandwidth of four RBs, the first set 7 and the second set 7 also correspond to the signal bandwidth of four RBs, and the first set 1, the second set 1, the first set 7, and the second set 7 all correspond to the subcarrier spacing of 15 kHz, but correspond to different frequencies or frequency ranges. Therefore, the first set 1 may be the same as or different from the first set 7, and the second set 1 may be the same as or different from the second set 7.

Optionally, when the first parameter includes the carrier frequency used for transmission of the first signal, the first root set or the first set and/or the second set may be further determined based on the maximum frequency offset allowed by the signal receiving end and/or the range of the detection window of the signal receiving end. For example, the first parameter includes one or more of the following: the bandwidth of the first signal, the length of the first ZC sequence, the carrier frequency used for transmission of the first signal, the subcarrier spacing of the first signal, the maximum frequency offset allowed by the signal receiving end, or the range of the detection window of the signal receiving end. Details are not described again.

The foregoing describes several manners of determining the first root set. The signal receiving end may determine the first root set or determine the first set and/or the second set in a manner the same as that of the signal transmitting end. Alternatively, the signal transmitting end may determine the first root set (or the first set and/or the second set) and indicate the first root set (or the first set and/or the second set) to the signal receiving end, or the signal receiving end may determine the first root set (or the first set and/or the second set) and indicate the first root set (or the first set and/or the second set) to the signal transmitting end.

It can be learned from the foregoing descriptions that the first root set in this embodiment of this application may include at least two subsets. A subset 1 among the at least two subsets is {N1, N1+1, ..., N2}, and a subset 2 among the at least two subsets is {N3, N3+1, ..., N4}. N1, N2, N3, and N4 are all positive integers, N4 is equal to the length of the first ZC sequence minus 1, and N1<N2<N3<N4. For example, the first root set is {1,2,3,4}∪{43,44,45,46}, {1,2,3,4} may be considered as the subset 1, and {43,44,45,46} may be considered as the subset 2. N1=1, N2=4, N3=43, N4=46, and the length of the first ZC sequence may be 45.

Alternatively, the first root set in this embodiment of this application may have another structure. For example, the first root set may include more subsets. For example, the first root set is {1,2,3,4,5,6}∪{136,137,138,139,140,141,142,143,144,145,146,147}∪{277,278,279,280,281,282} , including three subsets. Alternatively, the first root set in this embodiment of this application may include only one subset. This is not limited.

It can be learned from the foregoing descriptions that the signal transmitting end may determine the first root set, and then determine the first root from the first root set. Alternatively, the signal transmitting end may directly determine the first root without determining the first root set.

If the signal transmitting end determines the first root set, the signal transmitting end may select a root from the first root set, to determine a ZC sequence based on the selected root. For example, the root selected by the signal transmitting end is referred to as the first root, which is merely a name of a root, does not indicate that the root is a 1^{st} root in the first root set in sequence, and does not indicate a value relationship between the root and another root in the first root set (for example, does not indicate that the root is a root with the largest or smallest value in the first root set).

The signal transmitting end may determine the first root from the first root set in a plurality of manners. For example, a determining manner includes: The signal transmitting end selects any root from the first root set as the first root.

Alternatively, another determining manner includes: The signal transmitting end determines the first root from the first root set based on an identifier of a cell for transmission of the first signal. The cell for transmission of the first signal is, for example, referred to as a first cell. The first cell may correspond to one or more identifiers. The signal transmitting end may determine the first root based on one of the identifiers or determine the first root based on a plurality of identifiers among the identifiers. For example, if an LP-WUS is transmitted in the first cell, an identifier of the first cell is a first identifier, and may also be referred to as an LP-WUS identifier. If a non-low-power signal, for example, a non-LP-WUS, is transmitted in the first cell, or a signal whose target receiving end is a main radio (main radio, MR) of a UE is transmitted in the first cell, the identifier of the first cell is a second identifier. In this case, the signal transmitting end may determine the first root from the first root set based on the first identifier and/or the second identifier of the first cell. For example, the first root set includes *Nᵣₒₒₜ* roots, where *Nᵣₒₒₜ* is a positive integer, and the first root may satisfy the following relationship: $I = mod \left({N}_{cell}^{ID}, {N}_{root}\right)$ (Formula 9)

In Formula 9, ${N}_{cell}^{ID}$ represents the identifier of the first cell, and I represents the first root or represents an index (index) of the first root in the first root set.

Alternatively, still another determining manner includes: The signal transmitting end determines the first root from the first root set based on a time unit in which the first signal is located. For example, the signal transmitting end may determine the first root based on an index of the time unit. For example, for different time units, ZC sequences corresponding to different roots may be used. In this case, when determining the first root, the signal transmitting end may determine the first root based on a time unit occupied by the first signal, for example, based on an index of the time unit. For example, the first root may satisfy the following relationship: $I = {f}_{SH} \left({n}_{slot}\right)$ (Formula 10)

I represents the first root, and *nₛₗₒₜ* represents the index of the time unit occupied by the first signal. For example, an implementation of Formula 10 is: $I = \left({\sum }_{m = 0}^{7} {2}^{m} c \left(8\left({N}_{symb}^{slot}{n}_{s , f}^{μ}+l\right)+m\right)\right) mod 30$ (Formula 11)

In Formula 11, c(i) represents a pseudo-random sequence, l is a number of an OFDM symbol in which the first signal is located in a slot, ${n}_{s , f}^{μ}$ represents a number of the slot in a data frame, and ${N}_{symb}^{slot}$ represents a quantity of OFDM symbols included in the slot.

Alternatively, in addition to the foregoing manners, the signal transmitting end may determine the first root in another manner. This is not limited.

The signal receiving end may determine the first root in a manner the same as that of the signal transmitting end. Alternatively, the signal transmitting end may determine the first root and indicate the first root to the signal receiving end, or the signal receiving end may determine the first root and indicate the first root to the signal receiving end. If the signal receiving end determines the first root, for a determining manner, refer to the foregoing descriptions of the manner in which the signal transmitting end determines the first root.

Optionally, the signal transmitting end may further determine a quantity of cyclic shifts supported by the first root set. In addition to using 'ON'/'OFF' of an OOK signal to transfer information, a transmitter at the signal transmitting end may further use a cyclic shift to transfer information, thereby increasing a data rate or improving transmission performance. To cause the signal receiving end to correctly perform cyclic shift detection, a time domain offset caused by a frequency offset needs to be less than a cyclic shift interval. A size of a root set may affect a size of a time domain offset. Correspondingly, the size of the root set may affect a quantity of cyclic shifts supported by the root set. Therefore, after determining the size of the root set (for example, the first root set), the signal transmitting end may further determine the quantity of cyclic shifts that can be supported by the first root set. Optionally, the signal transmitting end may determine, based on the first root set, the quantity of cyclic shifts that can be supported by the first root set. Alternatively, the signal transmitting end may determine, based on the first root set and the first parameter, the quantity of cyclic shifts that can be supported by the first root set.

An example in which the signal transmitting end determines, based on the first root set and the first parameter, the quantity of cyclic shifts that can be supported by the first root set is used. For example, the first parameter includes the quantity of symbol segments of the first signal. If the quantity of symbol segments of the first signal is M1, the corresponding quantity of cyclic shifts is K1. Alternatively, if the quantity of symbol segments of the first signal is M2, the corresponding quantity of cyclic shifts is K2. M1 is different from M2, and K1 is different from K2.

For another example, the first parameter includes the bandwidth of the first signal. If the bandwidth of the first signal is W3, the corresponding quantity of cyclic shifts is K3. Alternatively, if the bandwidth of the first signal is W4, the corresponding quantity of cyclic shifts is K4. W3 is different from W4, and K3 is different from K4.

For another example, the first parameter includes the subcarrier spacing. If the subcarrier spacing is c3, the corresponding quantity of cyclic shifts is K5. Alternatively, if the subcarrier spacing is c4, the corresponding quantity of cyclic shifts is K6. c3 is different from c4, and K5 is different from K6.

For example, if the bandwidth of the first signal is 11 RBs and the quantity of symbol segments is 2, the length of the ZC sequence is *N_{ZC}*=61. If a maximum timing error of a receiver at the signal receiving end is 1 *µs* and the subcarrier spacing is 15 kHz, a maximum frequency offset is two subcarriers. If the first root set is {1, 15, 20, 30, 31, 41, 46, 60} and the frequency offset reaches two subcarriers, the time offset may reach ±5.37 *µs*. Therefore, it may be determined that a maximum quantity of cyclic shifts that can be supported is 2. Alternatively, when the foregoing other conditions are the same, if the first root set is {1, 30, 31, 60}, the time offset is reduced to ±3.19 *µs* compared with ±5.37 *µs*. Therefore, it may be determined that a maximum quantity of cyclic shifts that can be supported is 4.

It may be understood that, as described above, a size of a root set may be affected by one or more of parameters such as a bandwidth, a length of a ZC sequence, a quantity of symbol segments, a subcarrier spacing, and a carrier frequency. Therefore, these parameters may indirectly affect a quantity of cyclic shifts that can be supported by the root set. Therefore, the quantity of cyclic shifts supported by the first root set may be determined based on one or more of the foregoing parameters.

Optionally, the signal transmitting end may determine a size of the first root set based on the quantity of cyclic shifts supported by the first root set. In this implementation, the signal transmitting end may first determine the quantity of cyclic shifts supported by the first root set, then determine the size of the first root set, and next determine the first root set, to determine the first root from the first root set.

In addition to using 'ON'/'OFF' of an OOK signal to transfer information, a transmitter at the signal transmitting end may further use a cyclic shift to transfer information, thereby increasing a data rate or improving transmission performance. To cause the signal receiving end to correctly perform cyclic shift detection, a time domain offset caused by a frequency offset needs to be less than a cyclic shift interval. A size of a root set may affect a size of a time domain offset. Correspondingly, the size of the root set may affect a quantity of cyclic shifts supported by the root set. Therefore, the signal transmitting end may first determine a quantity of cyclic shifts that need to be supported, to determine the size of the first root set. Optionally, the signal transmitting end may determine, based on the first parameter, the quantity of cyclic shifts that need to be supported, and then determine the size of the first root set based on the quantity of cyclic shifts. Optionally, the signal transmitting end may determine the first root set based on the quantity of cyclic shifts that the first root set needs to support, or the signal transmitting end may determine the first root set based on the quantity of cyclic shifts that the first root set needs to support and the first parameter.

An example in which the signal transmitting end determines, based on the parameter, the quantity of cyclic shifts that need to be supported is used. For example, the first parameter includes the quantity of symbol segments of the first signal. If the quantity of symbol segments of the first signal is M1, the corresponding quantity of cyclic shifts is K1. Alternatively, if the quantity of symbol segments of the first signal is M2, the corresponding quantity of cyclic shifts is K2. M1 is different from M2, and K1 is different from K2.

For another example, the first parameter includes the bandwidth of the first signal. If the bandwidth of the first signal is W3, the corresponding quantity of cyclic shifts is K3. Alternatively, if the bandwidth of the first signal is W4, the corresponding quantity of cyclic shifts is K4. W3 is different from W4, and K3 is different from K4.

For another example, the first parameter includes the subcarrier spacing. If the subcarrier spacing is c3, the corresponding quantity of cyclic shifts is K5. Alternatively, if the subcarrier spacing is c4, the corresponding quantity of cyclic shifts is K6. c3 is different from c4, and K5 is different from K6.

For example, if the bandwidth of the first signal is 11 RBs and the quantity of symbol segments is 2, the length of the ZC sequence is *N_{ZC}*=61. If a maximum timing error of a receiver at the signal receiving end is 1 *µs* and the subcarrier spacing is 15 kHz, a maximum frequency offset is two subcarriers. If it is determined that a maximum quantity of cyclic shifts that need to be supported is 2, a tolerable maximum time offset is 8 *µs*. In this case, it may be determined that the size of the first root set is 8. For example, the first root set is {1, 15, 20, 30, 31, 41, 46, 60}. Alternatively, if it is determined that a maximum quantity of cyclic shifts that need to be supported is 4, a tolerable maximum time offset is reduced to about 4 *µs*. In this case, it may be determined that the size of the first root set is 4. For example, the first root set is {1, 30, 31, 60}.

It may be understood that, as described above, a size of a root set may be affected by one or more of parameters such as a bandwidth, a length of a ZC sequence, a quantity of symbol segments, a subcarrier spacing, and a carrier frequency. In addition, the size of the root set may be affected by a quantity of supported cyclic shifts.

S502: The signal transmitting end sends the first signal. Correspondingly, the signal receiving end receives the first signal. The first signal may be a time domain signal.

The first signal is, for example, a synchronization signal, and the signal receiving end may perform synchronization with the signal transmitting end based on the synchronization signal. Alternatively, the first signal is, for example, a wake-up signal, and the wake-up signal includes, for example, an LP-WUS or a wake-up signal (wake-up signal, WUS). Alternatively, the first signal may be another signal, for example, a waveform signal. This is not limited in this embodiment of this application.

Optionally, after determining the first root, the signal transmitting end may determine the first ZC sequence based on the first root, and generate the first signal based on the first ZC sequence. In S502, the signal transmitting end may send a modulated first signal. For example, the signal transmitting end may use an OOK modulation scheme or another modulation scheme, for example, quadrature phase shift keying (quadrature phase shift keying, QPSK). The modulation scheme is not limited in this embodiment of this application. After receiving the first signal, the signal receiving end may perform demodulation in a demodulation scheme corresponding to the modulation scheme for the first signal.

For example, the signal receiving end demodulates the first signal by using a coherent receiver. The coherent receiver may sample the received first signal, and perform correlation calculation on a sampling result and a local ZC sequence (for example, a ZC sequence generated by the signal receiving end based on the first root) to implement demodulation. During demodulation, the coherent receiver may sample received signals. For example, the coherent receiver may truncate a received signal within a range of a detection window and perform correlation calculation. The detection window may slide within a specific range (the range is the range of the detection window), and move by one sampling point each time the detection window slides. Each time the detection window slides, one signal truncation and one correlation calculation may be completed. Therefore, the coherent receiver may obtain a demodulation result of the first signal based on a time domain position of a correlation peak. For more descriptions of the demodulation process, refer to the foregoing descriptions.

In embodiments of this application, it is considered that a time domain offset of a correlation peak is related to a root of a ZC sequence, and the root of the ZC sequence may affect a position of the correlation peak. The root of the ZC sequence is related to a corresponding parameter (for example, one or more of a bandwidth of a signal, a subcarrier spacing of the signal, or a carrier frequency used for transmission of the signal). Therefore, in embodiments of this application, corresponding root sets may be set respectively for different parameters, or corresponding first sets and/or second sets may be set for different parameters. It may be understood as that the root of the ZC sequence may be adjusted based on the parameter, so that the time domain offset of the correlation peak corresponding to the ZC sequence can be adjusted. In this way, the ZC sequence (or the signal corresponding to the ZC sequence, for example, the first signal, or a correlation peak of the first signal) can be detected by the signal receiving end to the greatest extent, thereby increasing the probability of successful demodulation by the signal receiving end. Optionally, in this embodiment of this application, when a root set (or the first set and/or the second set) is determined, parameters such as the maximum frequency offset allowed by the signal receiving end and/or the range of the detection window may be further considered. Based on the root set determined based on these parameters and a ZC sequence generated based on a root in the root set, a time domain offset of a correlation peak at the signal receiving end may be within a time domain offset range allowed by the signal receiving end, for example, within the range of the detection window of the signal receiving end. Alternatively, based on the first set and/or the second set determined based on these parameters and a ZC sequence generated based on a root corresponding to a value in the first set and/or the second set, a time domain offset of a correlation peak at the signal receiving end may be within a time domain offset range allowed by the signal receiving end, for example, within the range of the detection window of the signal receiving end. Therefore, when the signal receiving end performs sliding for sampling by using the detection window, the correlation peak can be within the range of the detection window, and can be detected by the detection window, thereby increasing the probability of successful demodulation by the signal receiving end.

FIG. 8 is a diagram of a structure of a communication apparatus according to an embodiment of this application. The communication apparatus 800 may be the signal transmitting end in the embodiment shown in FIG. 5 or a circuit system of the signal transmitting end, and is configured to implement the method corresponding to the signal transmitting end in the foregoing method embodiments. Alternatively, the communication apparatus 800 may be the signal receiving end in the embodiment shown in FIG. 5 or a circuit system of the signal receiving end, and is configured to implement the method corresponding to the signal receiving end in the foregoing method embodiments. For example, a circuit system is a chip system.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 800 includes one or more memories 803 configured to store instructions. Optionally, the memory 803 may further store data. The processor and the memory may be separately disposed, or may be integrated together.

Optionally, the communication apparatus 800 includes a communication line 802 and at least one communication interface 804. Because the memory 803, the communication line 802, and the communication interface 804 are all optional, the memory 803, the communication line 802, and the communication interface 804 are all represented by dashed lines in FIG. 8.

Optionally, the communication apparatus 800 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 800 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 801 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 802 may include a path on which information is transferred between the foregoing components.

The communication interface 804 is any apparatus, for example, a transceiver, and is configured to communicate with another device or a communication network, for example, an ethernet, a radio access network (radio access network, RAN), a wireless local area network (wireless local area network, WLAN), or a wired access network.

The memory 803 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of instructions or a data structure and that can be accessed by a computer, but is not limited thereto. The memory 803 may exist independently, and is connected to the processor 801 through the communication line 802. Alternatively, the memory 803 may be integrated with the processor 801.

The memory 803 is configured to store computer-executable instructions for executing the solutions of this application, and the processor 801 controls execution. The processor 801 is configured to execute the computer-executable instructions stored in the memory 803, to implement the steps performed by the signal transmitting end and/or the signal receiving end in the embodiment shown in FIG. 5.

Optionally, the computer-executable instructions in this embodiment of this application may also be referred to as application program code. This is not specifically limited in this embodiment of this application.

In a specific implementation, in an embodiment, the processor 801 may include one or more CPUs, for example, a CPU 0 and a CPU 1 shown in FIG. 8.

During specific implementation, in an embodiment, the communication apparatus 800 may include a plurality of processors, for example, the processor 801 and a processor 805 in FIG. 8. Each of the processors may be a single-core (single-CPU) processor or a multi-core (multi-CPU) processor. The processor herein may be one or more devices, circuits, and/or processing cores configured to process data (for example, computer program instructions).

When the apparatus shown in FIG. 8 is a chip, for example, a chip of the signal transmitting end, the chip includes the processor 801 (and may further include the processor 805), the communication line 802, and the communication interface 804, and optionally, may include the memory 803. Specifically, the communication interface 804 may be an input interface, a pin, a circuit, or the like. The memory 803 may be a register, a cache, or the like. The processor 801 and the processor 805 each may be a general-purpose CPU, a microprocessor, an ASIC, or one or more integrated circuits configured to control program execution of the communication method in any one of the foregoing embodiments.

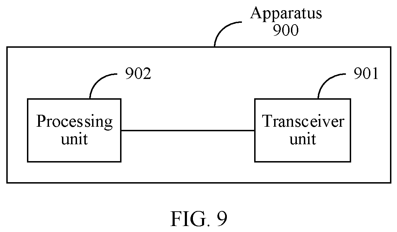

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on each corresponding function, FIG. 9 is a diagram of an apparatus. The apparatus 900 may be the signal transmitting end or the signal receiving end in the foregoing method embodiments, or a chip in the signal transmitting end or a chip in the signal receiving end. The apparatus 900 includes a processing unit 902 and a transceiver unit 901.

It should be understood that the apparatus 900 may be configured to implement the steps performed by the signal transmitting end and/or the signal receiving end in the communication method in embodiments of this application. For related features, refer to the embodiment shown in FIG. 5. Details are not described herein again.

Optionally, functions/implementation processes of the transceiver unit 901 and the processing unit 902 in FIG. 9 may be implemented by the processor 801 in FIG. 8 by invoking the computer-executable instructions stored in the memory 803. Alternatively, the function/implementation process of the processing unit 902 in FIG. 9 may be implemented by the processor 801 in FIG. 8 by invoking the computer-executable instructions stored in the memory 803, and the function/implementation process of the transceiver unit 901 in FIG. 9 may be implemented by the communication interface 804 in FIG. 8.

Optionally, when the apparatus 900 is a chip or a circuit, the function/implementation process of the transceiver unit 901 may alternatively be implemented by a pin, a circuit, or the like. Optionally, the transceiver unit 901 may include a sending unit and/or a receiving unit. The sending unit is configured to implement a sending function, and the receiving unit is configured to implement a receiving function. Alternatively, the transceiver unit 901 may be an integral module that can implement the sending function and/or the receiving function. Optionally, the transceiver unit 901 may be implemented by a transceiver.

This application further provides a computer-readable storage medium. The computer-readable storage medium stores a computer program or instructions. When the computer program or the instructions are run, the method performed by the signal transmitting end and/or the signal receiving end in the foregoing method embodiments is implemented. In this way, the functions in the foregoing embodiments may be implemented in a form of a software functional unit and sold or used as an independent product. Based on such an understanding, the technical solutions of this application essentially, or the part having contribution, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the signal transmitting end and/or the signal receiving end in any one of the foregoing method embodiments.

An embodiment of this application further provides a processing apparatus, including a processor and an interface. The processor is configured to perform the method performed by the signal transmitting end and/or the signal receiving end in any one of the foregoing method embodiments.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor may read information from the storage medium and write information to the storage medium. Optionally, the storage medium may be integrated into the processor. The processor and the storage medium may be disposed in an ASIC, and the ASIC may be disposed in a terminal device. Optionally, the processor and the storage medium may be disposed in different components of a terminal device.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the signal transmitting end and/or the signal receiving end may perform some or all steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

## Claims

1. A communication method, wherein the method comprises:
determining a first root, wherein the first root corresponds to a first parameter; and
sending or receiving a first signal, wherein the first signal is determined based on a first ZC sequence, the first ZC sequence is determined based on the first root, and the first parameter comprises at least one of the following: a bandwidth of the first signal, a subcarrier spacing of the first signal, a quantity of symbol segments of the first signal, or a carrier frequency used for transmission of the first signal.

2. The method according to claim 1, wherein the method further comprises:
receiving a first root set;
determining a first root set based on predefined information, wherein the predefined information comprises information about a correspondence between the first parameter and the first root set; or
determining a first root set based on the first parameter, wherein
the first root belongs to the first root set, and the first root set corresponds to the first parameter.

3. The method according to claim 2, wherein any root q in the first root set satisfies the following relationship: $Δ T = mod \left(\frac{{qn}_{Δ}}{{N}_{zc} Δ f}, \frac{1}{Δ f}\right) ,$ wherein
Δ*T* represents a maximum time domain offset of the first signal, 1 ≤ *q < N_{ZC}*, *N_{zc}* represents a length of the first ZC sequence, Δ*f* represents the subcarrier spacing of the first signal, *N_{zc}*Δ*f* represents the bandwidth of the first signal, *n*_{Δ} represents a frequency offset of the first signal, and mod represents a modulo operation.

4. The method according to claim 2, wherein any root q in the first root set satisfies the following relationship: $\left\{\begin{matrix}Δ T = \frac{{n}_{o}}{Δ {fN}_{zc} {N}_{seg}} \\ \left({kn}_{o}q-{kn}_{Δ}\right) mod {N}_{ZC} = 0\end{matrix}, wherein\right.$ *nₒ* represents a quantity of sampling points of a time offset, Δ*T* represents a maximum time domain offset of the first signal, 1 ≤ *q < N_{ZC}*, *N_{zc}* represents a length of the first ZC sequence, Δ*f* represents the subcarrier spacing of the first signal, *N_{zc}*Δ*f* represents the bandwidth of the first signal, *n*_{Δ} represents a frequency offset of the first signal, k represents a constant, and mod represents a modulo operation.

5. The method according to claim 3 or 4, wherein the maximum time domain offset of the first signal is a sliding range of a detection window, and the detection window is used to detect the first signal.

6. The method according to any one of claims 2 to 5, wherein the determining the first root set based on the first parameter comprises:
determining, based on the first parameter, a quantity of cyclic shifts that the first root set needs to support; and
determining the first root set based on the quantity of cyclic shifts.

7. The method according to any one of claims 2 to 5, wherein the method further comprises:
determining, based on the first root set, a quantity of cyclic shifts that the first root set needs to support.

8. The method according to claim 6 or 7, wherein
the quantity of symbol segments of the first signal is M1, and the quantity of cyclic shifts is K1; or
the quantity of symbol segments of the first signal is M2, and the quantity of cyclic shifts is K2, wherein
M1 is not equal to M2, and K1 is different from K2.

9. The method according to claim 6 or 7, wherein
the bandwidth of the first signal is W3, and the quantity of cyclic shifts is K3; or
the bandwidth of the first signal is W4, and the quantity of cyclic shifts is K4, wherein
W3 is not equal to W4, and K3 is different from K4.

10. The method according to claim 6 or 7, wherein
the subcarrier spacing is c3, and the quantity of cyclic shifts is K5; or
the subcarrier spacing is c4, and the quantity of cyclic shifts is K6, wherein
c3 is not equal to c4, and K5 is different from K6.

11. The method according to any one of claims 2 to 10, wherein
the quantity of symbol segments of the first signal is N1, and the first root set is S7; or
the quantity of symbol segments of the first signal is N2, and the first root set is S8, wherein
N1 is not equal to N2, and S7 is different from S8.

12. The method according to claim 11, wherein that S7 is different from S8 comprises one or more of the following:
a quantity of roots comprised in S7 is different from a quantity of roots comprised in S8;
at least one root comprised in S7 is different from a root comprised in S8; or
a function used to determine a root in S7 is different from a function used to determine a root in S8.

13. The method according to any one of claims 2 to 10, wherein
the bandwidth of the first signal is W1, and the first root set is S1; or
the bandwidth of the first signal is W2, and the first root set is S2, wherein
W1 is not equal to W2, and S1 is different from S2.

14. The method according to claim 13, wherein that S1 is different from S2 comprises one or more of the following:
a quantity of roots comprised in S1 is different from a quantity of roots comprised in S2;
at least one root comprised in S1 is different from a root comprised in S2; or
a function used to determine a root in S1 is different from a function used to determine a root in S2.

15. The method according to any one of claims 2 to 10, wherein
the subcarrier spacing is c1, and the first root set is S3; or
the subcarrier spacing is c2, and the first root set is S4, wherein
c1 is not equal to c2, and S3 is different from S4.

16. The method according to claim 15, wherein that S3 is different from S4 comprises one or more of the following:
a quantity of roots comprised in S3 is different from a quantity of roots comprised in S4;
at least one root comprised in S3 is different from a root comprised in S4; or
a function used to determine a root in S3 is different from a function used to determine a root in S4.

17. The method according to any one of claims 2 to 10, wherein
the carrier frequency used for transmission of the first signal is f1, and the first root set is S5; or
the carrier frequency used for transmission of the first signal is f2, and the first root set is S6, wherein
f1 is not equal to f2, and S5 is different from S6.

18. The method according to claim 17, wherein that S5 is different from S6 comprises one or more of the following:
a quantity of roots comprised in S6 is different from a quantity of roots comprised in S6;
at least one root comprised in S6 is different from a root comprised in S6; or
a function used to determine a root in S6 is different from a function used to determine a root in S6.

19. The method according to any one of claims 2 to 18, wherein the first root set comprises at least two subsets, a subset 1 among the at least two subsets is {N1, N1+1, ..., N2}, and a subset 2 among the at least two subsets is {N3, N3+1, ..., N4}, wherein
N1, N2, N3, and N4 are all positive integers, N4 is equal to the length of the first ZC sequence minus 1, and N1<N2<N3<N4.

20. The method according to any one of claims 2 to 19, wherein the determining the first root comprises:
determining the first root from the first root set based on an identifier of a first cell used for sending or receiving the first signal; or
determining the first root from the first root set based on an index of a time unit used for sending or receiving the first signal.

21. The method according to claim 1, wherein the method further comprises:
receiving a first set and/or a second set;
determining a first set and/or a second set based on predefined information, wherein the predefined information comprises information about a correspondence between the first parameter and the first set and/or a correspondence between the first parameter and the second set; or
determining a first set and/or a second set based on the first parameter, wherein
the first set and/or the second set is used to determine the first root, and the first set and/or the second set corresponds to the first parameter.

22. The method according to claim 21, wherein the method further comprises:
determining the first root based on the first set and/or the second set; or
determining a first root set based on the first set and/or the second set, and determining the first root from the first root set.

23. The method according to claim 21 or 22, wherein
the bandwidth of the first signal is W1, the first set is U1, and the second set is V1; or
the bandwidth of the first signal is W2, the first set is U2, and the second set is V2, wherein
W1 is not equal to W2; and U1 is different from U2 and/or V1 is different from V2.

24. The method according to claim 21 or 22, wherein
the subcarrier spacing is c1, the first set is U3, and the second set is V3; or
the subcarrier spacing is c2, the first set is U4, and the second set is V4, wherein
c1 is not equal to c2; and U3 is different from U4 and/or V3 is different from V4.

25. The method according to claim 21 or 22, wherein
the carrier frequency used for transmission of the first signal is f1, the first set is U5, and the second set is V5; or
the carrier frequency used for transmission of the first signal is f2, the first set is U6, and the second set is V6, wherein
f1 is not equal to f2; and U5 is different from U6 and/or V5 is different from V6.

26. The method according to any one of claims 1 to 25, wherein the first signal is modulated by using on-off-keying OOK.

27. The method according to any one of claims 1 to 26, wherein the first signal is a synchronization signal or a wake-up signal.

28. A communication apparatus, wherein the communication apparatus comprises a processing unit and a transceiver unit, and the processing unit is coupled to the transceiver unit, to perform the method according to any one of claims 1 to 27.

29. A communication apparatus, wherein the communication apparatus comprises a processor, and the processor is configured to cause the communication apparatus to perform the method according to any one of claims 1 to 27.

30. A computer-readable storage medium, wherein the computer-readable storage medium is configured to store a computer program, and when the computer program is run on a computer, the computer is caused to perform the method according to any one of claims 1 to 27.

31. A computer program product, wherein the computer program product comprises a computer program, and when the computer program is run on a computer, the computer is caused to perform the method according to any one of claims 1 to 27.

32. A chip, wherein the chip comprises:
a processor and an interface, wherein the processor is configured to invoke instructions from the interface and run the instructions, and when the processor executes the instructions, the method according to any one of claims 1 to 27 is implemented.
